(19) Europäisches Patentamt
European Patent Office
Office européen des brevets

(11) **EP 4 375 881 A1**

(12) **EUROPEAN PATENT APPLICATION**
published in accordance with Art. 153(4) EPC

(43) Date of publication:
**29.05.2024 Bulletin 2024/22**

(21) Application number: **22845063.1**

(22) Date of filing: **21.06.2022**

(51) International Patent Classification (IPC):
***G06N 3/08*** (2023.01)

(52) Cooperative Patent Classification (CPC):
**G06V 40/161; G06N 3/08**

(86) International application number:
**PCT/CN2022/100106**

(87) International publication number:
**WO 2023/000898 (26.01.2023 Gazette 2023/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.07.2021 CN 202110817137**

(71) Applicant: **TENCENT TECHNOLOGY (SHENZHEN) COMPANY LIMITED**
**Shenzhen, Guangdong 518057 (CN)**

(72) Inventors:
• **KANG, Yang**
  **Shenzhen, Guangdong 518057 (CN)**
• **SUN, Shuang**
  **Shenzhen, Guangdong 518057 (CN)**

(74) Representative: **EP&C**
**P.O. Box 3241**
**2280 GE Rijswijk (NL)**

(54) **IMAGE SEGMENTATION MODEL QUANTIZATION METHOD AND APPARATUS, COMPUTER DEVICE, AND STORAGE MEDIUM**

(57)     Embodiments of this application disclose an image segmentation model quantization method and apparatus, a computer device, and a storage medium, and belong to the field of computer technologies. The method includes: acquiring a first image segmentation model, the first image segmentation model including a plurality of first operators, a concatenation layer, and a second operator (801); determining an input range of each operator of the first operators and the second operator, and determining a quantization parameter of the each operator based on the input range of the each operator and a target output range, output data obtained based on the determined quantization parameter of the each operator belonging to the target output range (802); quantizing a network parameter of the concatenation layer based on the determined quantization parameter, to obtain a quantized image segmentation model (803) for performing an image segmentation task (804). This ensures that a plurality of input ranges and network parameter ranges of the concatenation layer are the same, thereby completing quantization of the concatenation layer.

FIG. 3

**Description**

RELATED APPLICATION

This application claims priority to Chinese Patent Application No. 202110817137.6, entitled "MODEL QUANTIZATION METHOD AND APPARATUS, COMPUTER DEVICE, AND STORAGE MEDIUM" filed on July 20, 2021, which is incorporated by reference in its entirety.

FIELD OF THE TECHNOLOGY

Embodiments of this application relate to the field of computer technologies, and in particular, to an image segmentation model quantization method and apparatus, a computer device, and a storage medium.

BACKGROUND OF THE DISCLOSURE

With continuous development of artificial intelligence technologies, various neural network models are increasingly widely applied. To improve processing efficiency of a neural network model, network parameters at various network layers in the neural network model are usually quantized, so that quantized network layers can directly process integer data.

In the related art, a plurality of pieces of data inputted to a concatenation layer need to be within the same range, and integer data outputted by quantized network layers may have different ranges. Therefore, a network parameter of the concatenation layer is not quantized.

SUMMARY

Embodiments of this application provide an image segmentation model quantization method and apparatus, a computer device, and a storage medium, to improve image segmentation efficiency. The technical solutions are as follows:

According to an aspect, an image segmentation model quantization method is provided. The method includes:

acquiring, by a computer device, a first image segmentation model, the first image segmentation model comprising a plurality of first operators, a concatenation layer, and a second operator, an output of each of the first operators being an input of the concatenation layer, and an output of the concatenation layer being an input of the second operator;

determining, by the computer device, an input range of each operator of the first operators and the second operator, and determining a quantization parameter of the each operator based on the input range of the each operator and a target output range, output data obtained based on the determined quantization parameter of the each operator belonging to the target output range;

quantizing, by the computer device, a network parameter of the concatenation layer based on the determined quantization parameter, to obtain a quantized image segmentation model for performing an image segmentation task.

In the embodiments of the present disclosure (including the embodiments of both the claims and the specification), after quantizing, by the computer device, a network parameter of the concatenation layer based on the determined quantization parameter, to obtain a quantized image segmentation model, the method can further comprise: calling the quantized image segmentation model to perform an image segmentation task.

In the embodiments of the present disclosure, the determining, by the computer device, a quantization parameter of the second operator based on the input range of the second operator in the round, the input range of the second operator in the previous round, and the target output range can include:

weighting, by the computer device, the input range of the second operator in the round and the input range of the second operator in the previous round, to obtain a second input range of the second operator; and

determining, by the computer device, the quantization parameter of the second operator based on the second input range of the second operator and the target output range, so that the determined quantization parameter is capable of quantizing data within the second input range into the target output range.

In the embodiments of the present disclosure, the determining, by the computer device, an input range of each operator of the first operators and the second operator can include:

acquiring, by the computer device, association information of the concatenation layer, the association information indicating a plurality of the first operators located before the concatenation layer and the second operator located after the concatenation layer;

determining, by the computer device, the plurality of the first operators and the second operator based on the association information; and

determining, by the computer device, an input range of each of the plurality of the first operators and an input range of the second operator.

In the embodiments of the present disclosure, the acquiring, by a computer device, a first image segmentation model can include:

acquiring, by the computer device, a second image segmentation model, the second image segmentation model including a plurality of network layers that are connected sequentially, the plurality of network layers including at least the concatenation layer and a plurality of first network layers, and the first network layers being network layers that are connected to the concatenation layer and that are located before the concatenation layer; and

inserting, by the computer device, the first operator between the concatenation layer and each of the first network layers, and inserting the second operator after the concatenation layer, to obtain the first image segmentation model.

According to another aspect, an image segmentation model quantization apparatus is provided. In the embodiments of the present disclosure, the apparatus can include:

a model acquisition module, configured to acquire a first image segmentation model, the first image segmentation model including a plurality of first operators, a concatenation layer, and a second operator, an output of each of the first operators being an input of the concatenation layer, and an output of the concatenation layer being an input of the second operator;

a parameter update module, configured to determine an input range of each operator of the first operators and the second operator, and determine a quantization parameter of the each operator based on the input range of the each operator and a target output range, output data obtained based on the determined quantization parameter of the each operator belonging to the target output range;

a quantization module, configured to quantize a network parameter of the concatenation layer based on the determined quantization parameter to obtain a quantized image segmentation model; and

a segmentation module, configured to call the quantized image segmentation model to perform an image segmentation task.

In the embodiments of the present disclosure, the parameter update module can include:

a first parameter update unit, configured to determine a quantization parameter of each of the first operators based on an input range of each of the first operators, an input range of the second operator, and the target output range, output data obtained based on the determined quantization parameter of each of the first operators belonging to the target output range; and

a second parameter update unit, configured to determine a quantization parameter of the second operator based on the input range of the second operator and the target output range, output data obtained based on the determined quantization parameter of the second operator belonging to the target output range.

In the embodiments of the present disclosure, the parameter update module can include:

a range determining unit, configured to: for each of a plurality of rounds, determine an input range of the each operator in the round; and

a third parameter update unit, configured to determine the quantization parameter of the each operator based on the input range of the each operator in the round, an input range of the each operator in a previous round of the round, and the target output range.

In the embodiments of the present disclosure, the range determining unit can be configured to call the first image segmentation model to process a plurality of pieces of test data corresponding to the round, to determine the input range of the each operator in the round, a plurality of pieces of test data corresponding to each round varying.
In the embodiments of the present disclosure, the third parameter update unit can be configured to:

determine a quantization parameter of each of the first operators based on an input range of each of the first operators in the round, an input range of each of the first operators in the previous round, an input range of the second operator in the round, an input range of the second operator in the previous round, and the target output range; and

determine a quantization parameter of the second operator based on the input range of the second operator in the round, the input range of the second operator in the previous round, and the target output range, until output data obtained based on the determined quantization parameter of the each operator of the first operators and the second operator belongs to the target output range.

In the embodiments of the present disclosure, the third parameter update unit can be configured to:

weight the input range of each of the first operators in the round and the input range of each of the first operators in the previous round, to obtain a first input range of each of the first operators;

weight the input range of the second operator in the round and the input range of the second operator in the previous round, to obtain a second input range of the second operator; and

determine the quantization parameter of each of the first operators based on the first input range of each of the first operators, the second input range, and the target output range.

In the embodiments of the present disclosure, the third parameter update unit can be configured to:

determine a first weight parameter corresponding to each of the first operators, and a second weight parameter corresponding to the second operator, the first weight parameter being negatively correlated with the number of times of determining the quantization parameter, and the second weight parameter being positively correlated with the number;

weight the first input range of each of the first operators and the second input range based on the first weight parameter and the second weight parameter, to obtain a target input range of each of the first operators; and

determine the quantization parameter of each of the first operators based on the target input range of each of the first operators and the target output range, so that the determined quantization parameter is capable of quantizing data within the target input range into the target output range.

In the embodiments of the present disclosure, the third parameter update unit can be configured to:

for each of the first operators, weight, based on a first weight parameter of the first operator and the second weight parameter, a minimum value within a first input range of the first operator and a minimum value within the second input range, to obtain a target minimum value;

weight, based on the first weight parameter and the second weight parameter, a maximum value within the first input range and a maximum value within the second input range, to obtain a target maximum value; and

determine that a range between the target minimum value and the target maximum value is a target input range of the first operator.

In the embodiments of the present disclosure, each of the first operators can include a first quantization parameter, and the third parameter update unit is configured to:

for each of the first operators, determine a first difference between a maximum value and a minimum value within a target input range of the first operator;

determine a second difference between a maximum value and a minimum value within the target output range; and

determine that a ratio of the first difference to the second difference is the first quantization parameter of the first operator, the first quantization parameter indicating a scaling ratio of data.

In the embodiments of the present disclosure, each of the first operators can further include a second quantization parameter, and the third parameter update unit can be configured to:

round a ratio of the minimum value within the target input range to the determined first quantization parameter, to obtain a reference minimum value; and

determine that a difference between the minimum value within the target output range and the reference minimum value is the second quantization parameter of the first operator, the second quantization parameter indicating a shift magnitude of data.

In the embodiments of the present disclosure, the third parameter update unit can be configured to:

weight the input range of the second operator in the round and the input range of the second operator in the previous round, to obtain a second input range of the second operator; and

determine the quantization parameter of the second operator based on the second input range of the second operator and the target output range, so that the determined quantization parameter is capable of quantizing data within the second input range into the target output range.

In the embodiments of the present disclosure, the parameter update module can include:

a range determining unit, configured to disable each of the first operators and the second operator in the first image segmentation model, determine that each of a plurality of input ranges of the concatenation layer is respectively a third input range of corresponding one of the first operators, and determine that an output range of the concatenation layer is a third input range of the second operator; and

a third parameter update unit, configured to determine a quantization parameter of each of the first operators and a quantization parameter of the second operator based on the third input range of each of the first operators, the third input range of the second operator, and the target output range,

the range determining unit being further configured to enable each of the first operators and the second operator in the first image segmentation model, and determine a fourth input range of each of the first operators and a fourth input range of the second operator; and

the third parameter update unit being configured to redetermine the quantization parameter of each of the first operators and the quantization parameter of the second operator based on the fourth input range of each of the first operators, the fourth input range of the second operator, and the target output range, output data obtained based on the redetermined quantization parameter of the each of the first operators and the second operator belonging to the target output range.

In the embodiments of the present disclosure, each of the first operators can include a first quantization operator and a first dequantization operator, and the apparatus can further include:
an operator adjustment module, configured to delete the first dequantization operator from each of the first operators, and delete the second quantization operator from the second operator.
In the embodiments of the present disclosure, the parameter update module can include:

a range determining unit, configured to acquire association information of the concatenation layer, the association information indicating a plurality of the first operators located before the concatenation layer and the second operator located after the concatenation layer,

the range determining unit being configured to determine the plurality of the first operators and the second operator based on the association information; and

the range determining unit being configured to determine an input range of each of the plurality of the first operators and an input range of the second operator.

In the embodiments of the present disclosure, the model acquisition module can include:

a model acquisition unit, configured to acquire a second image segmentation model, the second image segmentation model including a plurality of network layers that are connected sequentially, the plurality of network layers including at least the concatenation layer and a plurality of first network layers, and the first network layers being network layers that are connected to the concatenation layer and that are located before the concatenation layer; and

an operator insertion unit, configured to insert the first operator between the concatenation layer and each of the first network layers, and insert the second operator after the concatenation layer, to obtain the first image segmentation model.

According to another aspect, a facial recognition model quantization method is provided. In the embodiments of the present disclosure, the method can include:

acquiring, by a computer device, a first facial recognition model, the first facial recognition model including a plurality of first operators, a concatenation layer, and a second operator, an output of each of the first operators being an input of the concatenation layer, and an output of the concatenation layer being an input of the second operator;

determining, by the computer device, an input range of each operator of the first operators and the second operator, and determining a quantization parameter of the each operator based on the input range of the each operator and a target output range, output data obtained based on the determined quantization parameter of the each operator belonging to the target output range;

quantizing, by the computer device, a network parameter of the concatenation layer based on the determined quantization parameter, to obtain a quantized facial recognition model; and

calling the quantized facial recognition model to perform a facial recognition task.

According to another aspect, an image classification model quantization method is provided. In the embodiments of the present disclosure, the method can include:

acquiring, by a computer device, a first image classification model, the first image classification model including a plurality of first operators, a concatenation layer, and a second operator, an output of each of the first operators being an input of the concatenation layer, and an output of the concatenation layer being an input of the second operator;

determining, by the computer device, an input range of each operator of the first operators and the second operator, and determining a quantization parameter of the each operator based on the input range of the each operator and a target output range, output data obtained based on the determined quantization parameter of the each operator belonging to the target output range;

quantizing, by the computer device, a network parameter of the concatenation layer based on the determined quantization parameter, to obtain a quantized image classification model; and

calling the quantized image classification model to perform an image classification task.

According to another aspect, a computer device is provided, the computer device including a processor and a memory, the memory storing at least one computer program, and the at least one computer program being loaded and executed by the processor to implement the operations performed in the method according to the foregoing aspects.
According to another aspect, a computer-readable storage medium is provided, the computer-readable storage medium storing at least one computer program, and the at least one computer program being loaded and executed by a processor to implement the operations performed in the method according to the foregoing aspects.

According to another aspect, a computer program product or a computer program is provided, the computer program product or the computer program including computer program code, the computer program code being stored in a computer-readable storage medium, a processor of a computer device reading the computer program code from the computer-readable storage medium, and the processor executing the computer program code, so that the computer device implements the operations performed in the method according to the foregoing aspects.

According to the method, apparatus, computer device, and storage medium provided in the embodiments of this application, the quantization parameter of each operator is determined by using the input range of each operator and the target output range, so that the quantization parameter of each operator converges to the quantization parameter corresponding to the target output range. In this way, a consistency constraint is performed on output ranges of a plurality of operators by using the target output range, so that the output ranges of the operators remain the same. This is equivalent to ensuring that a plurality of input ranges and network parameter ranges of the concatenation layer are the same, thereby completing quantization of the concatenation layer. In addition, integer data does not need to be converted into floating-point data, thereby helping improve processing efficiency of an image segmentation model, and therefore improving image segmentation efficiency.

BRIEF DESCRIPTION OF THE DRAWINGS

To describe the technical solutions in the embodiments of this application more clearly, the following briefly describes the accompanying drawings required for describing the embodiments. Apparently, the accompanying drawings in the following description show only some embodiments of this application, and a person of ordinary skill in the art may still derive other drawings from these accompanying drawings without creative efforts.

FIG. 1 is a schematic diagram of an implementation environment according to an embodiment of this application.

FIG. 2 is a flowchart of a model quantization method according to an embodiment of this application.

FIG. 3 is a flowchart of a model quantization method according to an embodiment of this application.

FIG. 4 is a schematic diagram of operator insertion according to an embodiment of this application.

FIG. 5 is another schematic diagram of operator insertion according to an embodiment of this application.

FIG. 6 is a flowchart of a model quantization method according to an embodiment of this application.

FIG. 7 is a flowchart of another model quantization method according to an embodiment of this application.

FIG. 8 is a flowchart of an image segmentation model quantization method according to an embodiment of this application.

FIG. 9 is a flowchart of another image segmentation model quantization method according to an embodiment of this application.

FIG. 10 is a schematic structural diagram of an image segmentation model quantization apparatus according to an embodiment of this application.

FIG. 11 is a schematic structural diagram of another image segmentation model quantization apparatus according to an embodiment of this application.

FIG. 12 is a schematic structural diagram of a terminal according to an embodiment of this application.

FIG. 13 is a schematic structural diagram of a server according to an embodiment of this application.

DESCRIPTION OF EMBODIMENTS

Embodiments of this application provide an image segmentation model quantization method. The method is performed by a computer device. The computer device can quantize a concatenation layer in a model, so that the concatenation layer can directly process data within a same range. Optionally, the computer device is a terminal. For example, the terminal is a plurality of types of terminals such as a mobile phone, a desktop computer, a laptop computer, a tablet computer, a smart television, a smart speaker, a vehicle-mounted terminal, a smart robot, or a smart watch. Optionally, the computer device is a server. The server is an independent physical server, a server cluster or a distributed system that includes a plurality of physical servers, or a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

In the embodiments of the present disclosure, a computer program included in the embodiments of this application can be deployed on one computer device for execution, or be executed on a plurality of computer devices in one location, or be executed on a plurality of computer devices that are distributed in a plurality of locations and that are interconnected through a communications network. The plurality of computer devices that are distributed in a plurality of locations and that are interconnected through a communications network can form a blockchain system.

In the embodiments of the present disclosure, the computer device in the embodiments of this application can be a node in a blockchain system. The node can store a quantized model in a blockchain, and then the node or a node corresponding to another device in the blockchain may acquire the quantized model from the blockchain.

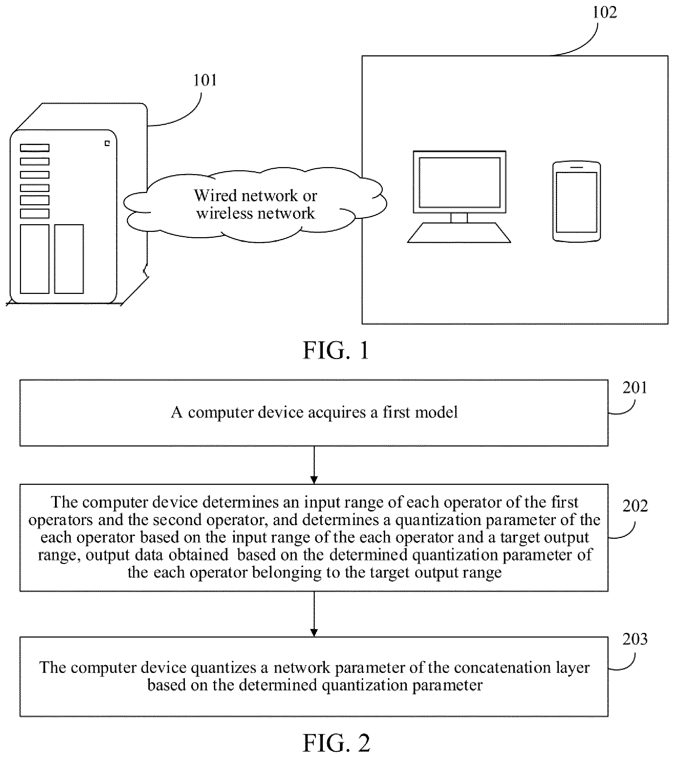

In the embodiments of the present disclosure, FIG. 1 is a schematic diagram of an implementation environment according to an embodiment of this application. As shown in FIG. 1, the implementation environment in this embodiment of this application can include a server 101 and a terminal 102, and a communications connection is established between the server 101 and the terminal 102 in a wireless or wired manner. The server 101 trains an image segmentation model, and quantizes a concatenation layer and other network layers in the image segmentation model, to obtain a quantized image segmentation model. The image segmentation model is quantized, so that a size of the model can be reduced, thereby reducing a configuration requirement for a device on which the image segmentation model is deployed. Therefore, the server 101 may transmit the quantized image segmentation model to the terminal 102, and the terminal 102 deploys the quantized image segmentation model, and calls the quantized image segmentation model to perform an image segmentation task to segment any image and obtain a segmentation result.

FIG. 2 is a flowchart of a model quantization method according to an embodiment of this application. This embodiment of this application is performed by a computer device. Optionally, the computer device is the terminal or the server in FIG. 1. In the embodiments of the present disclosure, as shown in FIG. 2, the method can include the following steps:

201: The computer device acquires a first model.

The first model includes a plurality of first operators, a concatenation layer, and a second operator, an output of each of the first operators is an input of the concatenation layer, and an output of the concatenation layer is an input of the second operator. That is, in the first model, the plurality of first operators are connected before the concatenation layer, and the second operator is connected after the concatenation layer. The concatenation layer is used for concatenating a plurality of pieces of input data.

The first model may include a plurality of types, and different models implement different functions. For example, the first model is a first image segmentation model, and the first image segmentation model is used for performing an image segmentation task; or the first model is a first facial recognition model, and the first facial recognition model is used for performing a facial recognition task; or the first model is a first image classification model, and the first image classification model is used for performing an image classification task.

202: The computer device determines an input range of each operator of the first operators and the second operator, and determines a quantization parameter of the each operator based on the input range of the each operator and a target output range, output data obtained based on the determined quantization parameter of the each operator belonging to the target output range. In other words, in the embodiments of the present disclosure, the computer device determines a quantization parameter of the each operator based on the input range of the each operator and a target output range, so that the quantization parameter of each operator converges to a quantization parameter corresponding to the target output range.

An input range of an operator is a value range to which input data of the operator belongs. In this embodiment of this application, the target output range is an expected value range to which output data of an operator belongs. Because an output of a first operator is an input of the concatenation layer, the target output range may alternatively be understood as an expected value range to which input data of the concatenation layer belongs. The quantization parameter corresponding to the target output range is used for quantizing any data into the target output range, that is, data obtained by quantizing any data based on the quantization parameter belongs to the target output range.

In the embodiments of the present disclosure, after determining the input range of each operator and the target output range, the computer device can determine (or called as "update" in the embodiments of the present disclosure) the quantization parameter of each operator based on the input range of each operator and the target output range, so that the quantization parameter of each operator converges to the quantization parameter corresponding to the target output range. Because the quantization parameter corresponding to the target output range is used for quantizing any data into the target output range, that the quantization parameter of each operator converges to the quantization parameter corresponding to the target output range is equivalent to that the quantization parameter of each operator is determined (or called as "updated" in the embodiments of the present disclosure) to make output data obtained by processing data by each operator with the determined quantization parameter belong to the target output range, that is, to make a plurality of pieces of input data of the concatenation layer all belong to the target output range.

203: The computer device quantizes a network parameter of the concatenation layer based on the determined quantization parameter. In the embodiments of the present disclosure, above determined quantization parameter corresponds to the target output range. In the embodiments of the present disclosure, above quantization parameter, which are used to quantize a network parameter of the concatenation layer can include the determined quantization parameter of each of the first operators, or include the determined quantization parameter of each of the first operators and the determined quantization parameter of the second operator.

After determining the quantization parameter of each operator so that the quantization parameter of each operator converges to the quantization parameter corresponding to the target output range, the computer device quantizes the network parameter of the concatenation layer based on the quantization parameter corresponding to the target output range, that is, quantizes the network parameter of the concatenation layer into the target output range based on the quantization parameter corresponding to the target output range.

In the embodiments of the present disclosure, quantizing the concatenation layer can mean quantizing an input range of the concatenation layer and quantizing the network parameter of the concatenation layer, so that both the input range and the network parameter belong to the target output range. Step 202 can be performed to make a plurality of pieces of input data of the concatenation layer all belong to the target output range, and step 203 can be performed to quantize the network parameter of the concatenation layer into the target output range. Therefore, the input data and the network parameter of the concatenation layer both belong to the target output range, thereby implementing quantization of the concatenation layer.

Model quantization is a technology for converting floating-point computation into fixed-point computation on least significant bits, so that model computation intensity, a parameter size, and memory consumption can be effectively reduced. Actually, the model quantization is to quantize floating-point data into integer data represented by using n bits, where n is any positive integer. Regardless of whether values of the n bits are 0 or 1, the obtained integer data is an exponential power of 2, so that the floating-point data can be quantized into an exponential power of 2. For example, n is 8, and the first bit of the n bits indicates whether the integer data is positive or negative. In this case, a minimum value within the target output range is a negative number of the 7th power of 2, and a maximum value is the 7th power of 2 minus 1. Therefore, the target output range is [-128, 127], indicating that data to be obtained by quantizing the input range and the network parameter of the concatenation layer is 8-bit integer data. In this case, the first model may also be referred to as an 8-bit quantization model.

After the first model is quantized, a quantized model may be called to perform a corresponding task. Different types of models perform different tasks. For example, in a case that the first model is the first image segmentation model, the computer device calls a quantized image segmentation model to perform an image segmentation task; or in a case that the first model is the first facial recognition model, the computer device calls a quantized facial recognition model to perform a facial recognition task; or in a case that the first model is the first image classification model, the computer device calls a quantized image classification model to perform an image classification task.

In the related art, a network parameter of a concatenation layer cannot be quantized. However, in the method provided in this embodiment of this application, the quantization parameter of each operator is determined based on the input range of each operator and the target output range, so that the quantization parameter of each operator converges to the quantization parameter corresponding to the target output range. In this way, a consistency constraint is performed on output ranges of a plurality of operators by using the target output range, so that the output ranges of the operators remain the same. In addition, the network parameter of the concatenation layer is quantized into the target output range, thereby ensuring that a plurality of input ranges and network parameter ranges of the concatenation layer are the same, and completing quantization of the concatenation layer. In the quantized first model, a plurality of pieces of input data of the concatenation layer all belong to the target output range, and the concatenation layer can directly concatenate input data that belongs to a same range. Therefore, the plurality of pieces of input data do not need to be converted into floating-point data first, thereby simplifying an operation process and helping improve processing efficiency of the model.

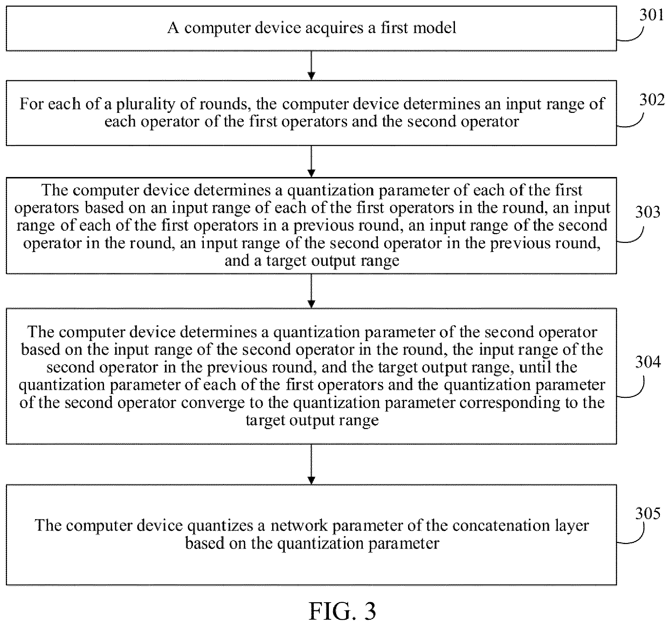

FIG. 3 is a flowchart of a model quantization method according to an embodiment of this application. This embodiment of this application is performed by a computer device. Optionally, the computer device is the terminal or the server in FIG. 1. In the embodiments of the present disclosure, as shown in FIG. 3, the method can include the following steps:

301: The computer device acquires a first model.

The first model includes a plurality of first operators, a concatenation layer, and a second operator, an output of each of the first operators is an input of the concatenation layer, and an output of the concatenation layer is an input of the second operator. The concatenation layer is used for concatenating a plurality of pieces of input data. Optionally, the concatenation layer is a concatenation operator (or called as a concat operator in the embodiments of the present disclosure). The first model is any type of neural network model, and it needs to be ensured that the first model includes a concatenation layer. For example, the first model is a speech recognition model, an image segmentation model, an image classification model, or a facial recognition model. This is not limited in this embodiment of this application.

In the embodiments of the present disclosure, the computer device can acquire a second model, the second model including a plurality of network layers that are connected sequentially, the plurality of network layers including at least a concatenation layer and a plurality of first network layers, and the first network layers being network layers that are separately connected to the concatenation layer and that are located before the concatenation layer. The computer device inserts the first operator between the concatenation layer and each first network layer, and inserts the second operator after the concatenation layer, to obtain the first model. The first network layer is any type of network layer, for example, a convolutional layer or a pooling layer.

After the computer device adds a corresponding first operator for the concatenation layer, input data (namely, output data of the first network layer) that originally can be directly inputted to the concatenation layer can be inputted to the concatenation layer only after being processed by a first operator. After the computer device adds a corresponding second operator for the concatenation layer, subsequent processing that originally can be directly performed on output data of the concatenation layer can be performed only after the output data of the concatenation layer is processed by the second operator.

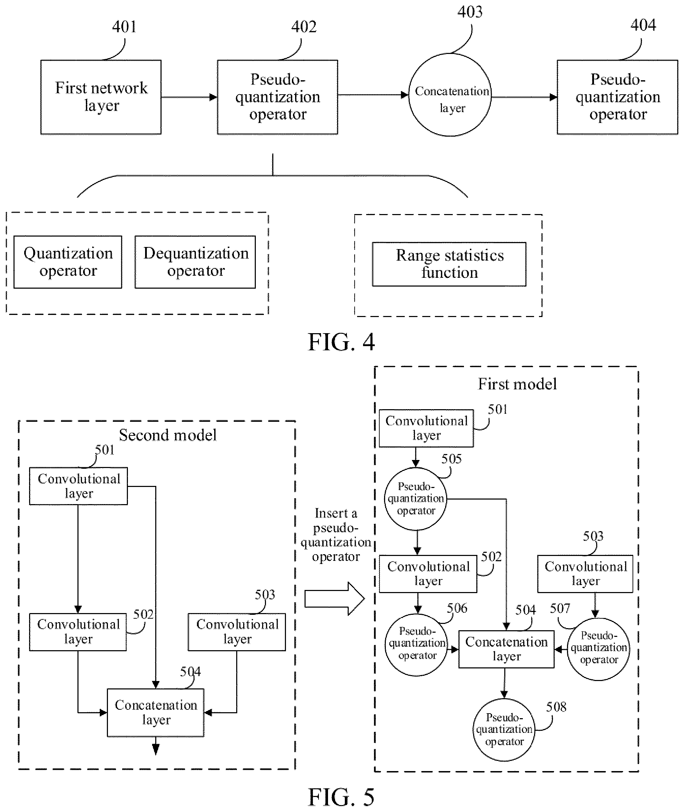

In the embodiments of the present disclosure, the first operator and the second operator can be pseudo-quantization operators. FIG. 4 is a schematic diagram of operator insertion according to an embodiment of this application. In the embodiments of the present disclosure, as shown in FIG. 4, a pseudo-quantization operator 402 can be inserted between a first network layer 401 and a concatenation layer 403, and a pseudo-quantization operator 404 can be inserted after the concatenation layer. Each pseudo-quantization operator includes a quantization operator and a dequantization operator. The quantization operator is used for quantization and the dequantization operator is used for dequantization. Each pseudo-quantization operator further has a corresponding range statistics function. The range statistics function of the pseudo-quantization operator is used for determining an input range of the pseudo-quantization operator.

FIG. 5 is another schematic diagram of operator insertion according to an embodiment of this application. In the embodiments of the present disclosure, as shown in FIG. 5, the second model can include a convolutional layer 501, a convolutional layer 502, a convolutional layer 503, and a concatenation layer 504, and the concatenation layer 504 can be separately connected to the convolutional layer 501, the convolutional layer 502, and the convolutional layer 503. In this case, the computer device inserts a pseudo-quantization operator 505 between the convolutional layer 501 and the concatenation layer 504, inserts a pseudo-quantization operator 506 between the convolutional layer 502 and the concatenation layer 504, inserts a pseudo-quantization operator 507 between the convolutional layer 503 and the concatenation layer 504, and connects a pseudo-quantization operator 508 after the concatenation layer 504, to obtain the first model. The pseudo-quantization operator 505, the pseudo-quantization operator 506, and the pseudo-quantization operator 507 are the first operators shown in this embodiment of this application, and the pseudo-quantization operator 508 is the second operator shown in this embodiment of this application.

302: For each of a plurality of rounds, the computer device determines an input range of each operator of the first operators and the second operator.

In the embodiments of the present disclosure, the computer device can perform a plurality of rounds to determine a quantization parameter of the each operator, and for each of the plurality of rounds, the computer device determines an input range of each operator of the first operators and the second operator. An input range of an operator (for example, above each operator of the first operators and the second operator in the embodiments of the present disclosure) is a value range to which input data of the operator belongs. A quantization parameter of an operator is a parameter for mapping data inputted to the operator to a specific output range. The input data of the operator is processed based on the quantization parameter of the operator, so that output data obtained through processing belongs to an output range corresponding to the quantization parameter.

In the embodiments of the present disclosure, the computer device can call the first model to process a plurality of pieces of test data corresponding to the round, so as to determine the input range of each of the plurality of first operators and the second operator in the round. A plurality of pieces of test data corresponding to each round vary. A type of the plurality of pieces of test data is related to a type of the first model. For example, in a case that the first model is an image segmentation model, the plurality of pieces of test data are a plurality of images.

The computer device acquires the plurality of pieces of test data corresponding to the round, and calls the first model to separately process the plurality of pieces of test data. For each of the plurality of first operators and the second operator, another network layer is connected before the operator, and during processing performed by the first model on specific test data, data outputted by the another network layer is inputted to the operator. In this case, during processing separately performed by the first model on the plurality of pieces of test data, a plurality of pieces of data are separately inputted to the operator. The computer device collects statistics on values of the plurality of pieces of data inputted to the operator, and determines an input range of the operator based on the values of the plurality of pieces of data. For example, the computer device determines that a range between a minimum value of the plurality of pieces of data and a maximum value of the plurality of pieces of data is the input range of the operator.

In the embodiments of the present disclosure, the computer device can acquire association information of the concatenation layer, the association information indicating a plurality of first operators located before the concatenation layer and the second operator located after the concatenation layer; and determine the plurality of first operators and the second operator based on the association information. Then the computer device can determine an input range of each of the plurality of the first operators and an input range of the second operator.

For ease of determining operators connected to the concatenation layer, during insertion of a first operator and a second operator corresponding to the concatenation layer, the computer device acquires the association information of the concatenation layer, the association information indicating a plurality of first operators located before the concatenation layer and the second operator located after the concatenation layer. Therefore, the computer device can determine, by querying the association information of the concatenation layer, the plurality of first operators located before the concatenation layer and the second operator located after the concatenation layer, so as to determine the input range of each of the plurality of first operators and the input range of the second operator.

The computer device calls the first model to process the plurality of pieces of test data to determine the input range of each operator (for example, above each operator of the first operators and the second operator in the embodiments of the present disclosure) in the first model, and stores the input range of each operator. Then, after querying, based on the association information, the first operators and the second operator that are connected to the concatenation layer, the computer device may acquire an input range of each of the first operators and an input range of the second operator from determined input ranges of a plurality of operators.

In the embodiments of the present disclosure, the association information can include an operator identifier and a plurality of operator pointers, the operator identifier can indicate the second operator located after the concatenation layer, and the operator pointers can indicate the first operators located before the concatenation layer. Therefore, the computer device can determine the second operator based on the operator identifier, and determine the plurality of first operators based on the operator pointers.

303: The computer device determines (or called as "updates" in the embodiments of the present disclosure) a quantization parameter of each of the first operators based on an input range of each of the first operators in the round, an input range of each of the first operators in a previous round, an input range of the second operator in the round, an input range of the second operator in the previous round, and a target output range.

In addition to determining the input range of each operator in the round, the computer device further acquires the input range of each operator in the previous round of the round, and determines the quantization parameter of each of the first operators based on the input range of each of the first operators in the round, the input range of each of the first operators in the previous round, the input range of the second operator in the round, the input range of the second operator in the previous round, and the target output range.

Because test data used in each round varies, an input range determined in each round also varies. In each round, the computer device determines the quantization parameter of the first operator with reference to an input range in the round and an input range in a previous round. This is equivalent to considering test data in two rounds, that is, an amount of information referenced during the update (or called as "determination" in the embodiments of the present disclosure) of the quantization parameter of the first operator is increased, thereby helping improve accuracy of determining the quantization parameter and increase a convergence speed of the quantization parameter.

In the embodiments of the present disclosure, determining (or called as "updating" in the embodiments of the present disclosure) the quantization parameter of each of the first operators based on the input range of each of the first operators, the input range of the second operator, and the target output range can be equivalent to broadcasting the input range of the second operator to each of the first operators, so that the quantization parameter of each of the first operators is constrained by using the input range of the second operator. In this way, the quantization parameter of each of the first operators and a quantization parameter of the second operator converge to a same value as soon as possible, thereby further increasing a convergence speed of the quantization parameters.

The target output range is an expected value range to which output data of an operator belongs. Because an output of a first operator is an input of the concatenation layer, the target output range may alternatively be understood as an expected value range to which input data of the concatenation layer belongs. The target output range is also referred to as a quantization range. Optionally, the target output range is preset by the computer device or is provided by a developer for the computer device. This is not limited in this embodiment of this application. Optionally, the target output range is determined based on a preset value n, which indicates to quantize floating-point data into integer data represented by using n bits, where n is any positive integer. Regardless of whether values of the n bits are 0 or 1, the obtained integer data is an exponential power of 2, so that the floating-point data can be quantized into an exponential power of 2.

In the embodiments of the present disclosure, output data of an operator can be integer data, and the integer data can be stored in a binary mode. The computer device determines storage space of the integer data, and determines the target output range based on the storage space of the integer data. Optionally, the computer device determines a minimum value that can be stored in the storage space and a maximum value that can be stored in the storage space, and determines that a range between the minimum value and the maximum value is the target output range. For example, in a case that n is 8, the 8-bit storage space is used for storing values in 8 bits. Therefore, in the 8-bit storage space, a minimum value that can be stored is 128, and a maximum value that can be stored is 127. Therefore, the target output range is [-128, 127]. Optionally, the size n of the storage space is preset by the computer device or is provided by a developer for the computer device. This is not limited in this embodiment of this application.

In the embodiments of the present disclosure, the computer device can weight the input range of each of the first operators in the round and the input range of each of the first operators in the previous round, to obtain a first input range of each of the first operators; and weight the input range of the second operator in the round and the input range of the second operator in the previous round, to obtain a second input range of the second operator. Therefore, the first input range includes information about the input range of the first operator in the round and the input range of the first operator in the previous round, and the second input range includes information about the input range of the second operator in the round and the input range of the second operator in the previous round. In this case, the computer device determines the quantization parameter of each of the first operators based on the first input range of each of the first operators, the second input range of the second operator, and target output range, thereby increasing an amount of information referenced during the determination of the quantization parameter of the first operator.

In the embodiments of the present disclosure, the computer device can weight a minimum value within the input range of each of the first operators in the round and a minimum value within the input range of each of the first operators in the previous round, to obtain a weighted minimum value; weight a maximum value within the input range of each of the first operators in the round and a maximum value within the input range of each of the first operators in the previous round, to obtain a weighted maximum value; and determine that a range between the weighted minimum value and the weighted maximum value is the first input range. A manner of determining the second input range is similar to the manner of determining the first input range.

In the embodiments of the present disclosure, the computer device can weight the input range of each of the first operators in the round and the input range of each of the first operators in the previous round by using a third weight parameter corresponding to the round and a fourth weight parameter corresponding to the previous round respectively, to obtain the first input range of each of the first operators; and the computer device can weight the input range of the second operator in the round and the input range of the second operator in the previous round by using the third weight parameter corresponding to the round and the fourth weight parameter corresponding to the previous round, to obtain the second input range of the second operator. In the embodiments of the present disclosure, a sum of the third weight parameter and the fourth weight parameter can be 1, and the third weight parameter and the fourth weight parameter can be both values between 0 and 1. For example, the third weight parameter and the fourth weight parameter are both 0.5.

In the embodiments of the present disclosure, that the computer device determines a quantization parameter of each of the first operators can include: determining a first weight parameter corresponding to each of the first operators, and a second weight parameter corresponding to the second operator; weighting the first input range of each of the first operators and the second input range based on each first weight parameter and the second weight parameter, to obtain a target input range of each of the first operators; and determining the quantization parameter of each of the first operators based on the target input range of each of the first operators and the target output range, so that a determined quantization parameter is capable of quantizing data within the target input range into the target output range. In the embodiments of the present disclosure, the determined quantization parameter is capable of quantizing data within the target input range into the target output range, which can refer to that output data obtained by processing data within the target input range based on the determined quantization parameter belongs to the target output range, or can refer to that output data obtained by processing data within the target input range by each of the first operators with the determined quantization parameter belongs to the target output range.

In the embodiments of the present disclosure, the first weight parameter can be negatively correlated with the number of times of determining the quantization parameter, and the second weight parameter can be positively correlated with the number. A smaller number of times of determining the quantization parameter indicates a larger first weight parameter and a smaller second weight parameter. A larger number of times of determining the quantization parameter indicates a smaller first weight parameter and a larger second weight parameter. Optionally, a sum of the first weight parameter and the second weight parameter is 1, and the first weight parameter and the second weight parameter are both values between 0 and 1. For example, during the first time of determining the quantization parameter, the first weight parameter is 1, and the second weight parameter is 0; and during the last time of determining the quantization parameter, the first weight parameter is 0, and the second weight parameter is 1. To be specific, in an initial determination of the quantization parameter, during determining of the target input range, the first input range of the first operator accounts for a larger proportion, and the second input range of the second operator accounts for a smaller proportion. With continuous determination (or called as update in the embodiments of the present disclosure) of the quantization parameter, the proportion of the first input range of the first operator is gradually reduced, and the proportion of the second input range of the second operator is gradually increased, so that the quantization parameter of the first operator and the quantization parameter of the second operator gradually converge to a same value under a constraint of the second input range of the second operator.

In the embodiments of the present disclosure, that the computer device obtains a target input range of each of the first operators can include: for each of the first operators, weighting, based on a first weight parameter of the first operator and the second weight parameter, a minimum value within a first input range of the first operator and a minimum value within the second input range, to obtain a target minimum value; weighting, based on the first weight parameter and the second weight parameter, a maximum value within the first input range and a maximum value within the second input range, to obtain a target maximum value; and determining that a range between the target minimum value and the target maximum value is a target input range of the first operator.

In the embodiments of the present disclosure, the computer device can determine the target minimum value and the target maximum value by using the following formula:

$$(\overline{xmin\_1}) = \alpha \times xmin\_4 + (1 - \alpha) \times xmin\_1;$$

and

$$(\overline{xmax\_1}) = \alpha \times xmax\_4 + (1 - \alpha) \times xmax\_1,$$

where

$(xmin\_1)$ indicates the target minimum value corresponding to the first operator, $xmin\_4$ indicates the minimum value within the second input range of the second operator, and $xmin\_l$ indicates the minimum value within the first input range of the first operator. $(xmax\_l)$ indicates the target maximum value corresponding to the first operator, $xmax\_4$ indicates the maximum value within the second input range of the second operator, and $xmax\_1$ indicates the maximum value within the first input range of the first operator. $\alpha$ indicates the second weight parameter, $1 - \alpha$ indicates the first weight parameter, $\alpha$ increases as the number of times of determining the quantization parameter increases, a minimum value of $\alpha$ is 0, and a maximum value of $\alpha$ is 1.

In the embodiments of the present disclosure, the first operator can include a first quantization parameter, and that the computer device determines a quantization parameter of each of the first operators can include: for each of the first operators, determining a first difference between a maximum value and a minimum value within a target input range of the first operator; determining a second difference between a maximum value and a minimum value within the target output range; and determining that a ratio of the first difference to the second difference is a determined first quantization parameter of the first operator.

The first quantization parameter indicates a scaling ratio of data. In this embodiment of this application, the first operator includes a quantization operator and a dequantization operator. The first operator is capable of quantizing and dequantizing any data. The quantizing any data includes scaling down the data to map the data from one value range to another value range. The dequantizing any data includes scaling up a quantized data to map the quantized data from the another value range back to the value range. The first quantization parameter is a ratio for scaling down or scaling up data.

In the embodiments of the present disclosure, the computer device can determine the first quantization parameter by using the following formula:

$$scale = ((max\_val - min\_val))/(qmax - qmin),$$

where

scale indicates the first quantization parameter, $max\_val$ indicates the maximum value within the target input range, $min\_val$ indicates the minimum value within the target input range, $qmax$ indicates the maximum value within the target output range, and $qmin$ indicates the minimum value within the target output range.

In the embodiments of the present disclosure, the first operator can further include a second quantization parameter, and that the computer device determines a quantization parameter of each of the first operators can include: rounding a ratio of the minimum value within the target input range to the determined first quantization parameter, to obtain a reference minimum value; and determining that a difference between the minimum value within the target output range and the reference minimum value is a determined second quantization parameter of the first operator.

The second quantization parameter indicates a shift magnitude of data. In this embodiment of this application, the quantizing and dequantizing any data further includes shifting any data to map the data from one value range to another value range, that is, shifting the data from one value range to another value range. The second quantization parameter is a magnitude for shifting data. The shifting any data means adding the second quantization parameter to the data or subtracting the second quantization parameter from the data, to change a value range to which the data belongs. Certainly, the data may alternatively be shifted based on the second quantization parameter in a manner other than addition or subtraction.

In the embodiments of the present disclosure, the computer device can determine the second quantization parameter by using the following formula:

$$zero\_point = qmin - round((min\_val)/scale),$$

where

zero _point indicates the second quantization parameter, qmin indicates the minimum value within the target output range, min_val indicates the minimum value within the target input range, scale indicates the first quantization parameter, and round(·) indicates a rounding function.

The first quantization parameter and the second quantization parameter are capable of quantizing data within the target input range into the target output range. In the embodiments of the present disclosure, the first quantization parameter and the second quantization parameter are capable of quantizing data within the target input range into the target output range, which can refer to that output data obtained by processing data within the target input range based on the determined quantization parameter (for example, including the first quantization parameter and the second quantization parameter) belongs to the target output range, or can refer to that output data obtained by processing data within the target input range by each of the first operators with the determined quantization parameter (for example, including the first quantization parameter and the second quantization parameter) belongs to the target output range. In the embodiments of the present disclosure, the first operator and the second operator are pseudo-quantization operators, a pseudo-quantization operator includes a quantization operator and a dequantization operator, and the first quantization parameter and the second quantization parameter are parameters of a quantization operator and a dequantization operator. In the embodiments of the present disclosure, an expression formula of the quantization operator can be as follows:

$$X\_Q = clamp(round(X\_F/scale) + zero\_point, qmin, qmax),$$

where

X_F indicates input data of the quantization operator, X_Q indicates output data of the quantization operator, scale indicates the first quantization parameter, round(·) indicates a rounding function, zero_point indicates the second quantization parameter, qmin indicates the minimum value within the target output range, qmax indicates the maximum value within the target output range, and clamp(·) indicates a range limiting function used for limiting X_Q between qmin and qmax. Optionally, X_F is floating-point data, and X_Q is integer data.

In the embodiments of the present disclosure, an expression formula of the dequantization operator can be as follows:

$$X\_F1 = (X\_Q - zero\_point) \times scale,$$

where

X_Q indicates input data of the dequantization operator, X_F1 indicates output data of the dequantization operator, there is an error caused by quantization between X_F1 and X_F, scale indicates the first quantization parameter, and zero_point indicates the second quantization parameter.

304: The computer device determines (or called as "updates" in the embodiments of the present disclosure) a quantization parameter of the second operator based on the input range of the second operator in the round, the input range of the second operator in the previous round, and the target output range, until the quantization parameter of each of the first operators and the quantization parameter of the second operator converge to the quantization parameter corresponding to the target output range. In the embodiments of the present disclosure, the quantization parameter of each of the first operators and the quantization parameter of the second operator converge to the quantization parameter corresponding to the target output range, which can refer to that output data obtained based on the determined quantization parameter (for example, the quantization parameter of each of the first operators and the quantization parameter of the second operator) belongs to the target output range, or can refer to that output data obtained by each operator of the first operators and the second operator with the determined quantization parameter (for example, the quantization parameter of each of the first operators and the quantization parameter of the second operator) belongs to the target output range.

In addition to determining the input range of each operator in the round, the computer device further acquires the input range of each operator (for example, each operator of the first operators and the second operator in the embodiments of the present disclosure) in the previous round of the round, and determines the quantization parameter of the second operator based on the input range of the second operator in the round, the input range of the second operator in the previous round, and the target output range.

In step 302 to step 304, a process of determining the quantization parameter of the first operator and the quantization parameter of the second operator is described only by using one round as an example. However, in this embodiment of this application, the quantization parameter of each operator is determined for a plurality of times through a plurality of rounds, until the quantization parameter of each of the first operators and the quantization parameter of the second operator converge to the quantization parameter corresponding to the target output range. The quantization parameter corresponding to the target output range is used for quantizing any data into the target output range.

In the embodiments of the present disclosure, that the computer device determines a quantization parameter of the second operator can include: weighting the input range of the second operator in the round and the input range of the second operator in the previous round, to obtain a second input range of the second operator; and determining the quantization parameter of the second operator based on the second input range of the second operator and the target output range, so that an determined quantization parameter is capable of quantizing data within the second input range into the target output range. In the embodiments of the present disclosure, the determined quantization parameter is capable of quantizing data within the second input range into the target output range, which can refer to that output data obtained by processing data within the second input range based on the determined quantization parameter belongs to the target output range, or can refer to that output data obtained by processing data within the second input range by the second operator with the determined quantization parameter belongs to the target output range.

A process of determining, by the computer device, the quantization parameter of the second operator based on the second input range and the target output range is similar to the process of determining the quantization parameter of the first operator based on the target input range and target output range in step 303. Details are not described herein again.

By performing step 303 and step 304, the computer device determines the quantization parameter of each operator based on the input range of each operator in the round, the input range of each operator in the previous round of the round, and the target output range, so that the quantization parameter of each operator converges to the quantization parameter corresponding to the target output range. In addition, the computer device may alternatively determine the quantization parameters in a manner different from that in step 303 and step 304. For example, the computer device determines a target first operator from the plurality of first operators, and constrains a quantization parameter of another first operator and the quantization parameter of the second operator based on an input range of the target first operator, so that the quantization parameter of the another first operator and the quantization parameter of the second operator converge to a quantization parameter corresponding to the input range of the target first operator.

305: The computer device quantizes a network parameter of the concatenation layer based on the quantization parameter. In the embodiments of the present disclosure, the quantization parameter corresponds to the target output range. In the embodiments of the present disclosure, the computer device quantizes a network parameter of the concatenation layer based on the quantization parameter to obtain a quantized image segmentation model for performing an image segmentation task.

The computer device quantizes the network parameter of the concatenation layer into the target output range based on the quantization parameter. In the embodiments of the present disclosure, the quantization parameter corresponds to the target output range. In the embodiments of the present disclosure, above quantization parameter, which are used to quantize the network parameter of the concatenation layer can include the determined quantization parameter of each of the first operators, or include the determined quantization parameter of each of the first operators and the determined quantization parameter of the second operator.

In the embodiments of the present disclosure, the quantization parameter can include the first quantization parameter and the second quantization parameter described in step 303. A formula for quantizing, by the computer device, the network parameter of the concatenation layer can be as follows:

$$X\_L = \text{clamp}(\text{round}(X\_C/\text{scale}) + \text{zero\_point}, \text{qmin}, \text{qmax}),$$

where

$X\_C$ indicates the network parameter of the concatenation layer, $X\_L$ indicates a quantized network parameter, scale indicates the first quantization parameter, round($\cdot$) indicates a rounding function, zero_point indicates the second quantization parameter, qmin indicates the minimum value within the target output range, qmax indicates the maximum value within the target output range, and clamp($\cdot$) indicates a range limiting function used for limiting $X\_L$ between qmin and qmax.

Step 301 to step 304 can be performed to make a plurality of pieces of input data of the concatenation layer all belong to the target output range, and step 305 can be performed to further quantize the network parameter of the concatenation layer into the target output range. Therefore, the input data and the network parameter processed at the concatenation layer are both within the target output range, thereby implementing quantization of the concatenation layer. In the embodiments of the present disclosure, after step 305, the method further comprises: calling the quantized image segmentation model to perform an image segmentation task.

In the embodiments of the present disclosure, the first operator and the second operator can be both pseudo-quantization operators, the first operator can include a first quantization operator and a first dequantization operator, the second operator can include a second quantization operator and a second dequantization operator, and the determined quantization parameter of the first operator and the determined quantization parameter of the second operator can be both the quantization parameter corresponding to the target output range. After performing step 304, the computer device deletes the first dequantization operator from each of the first operators, deletes the second quantization operator from the second operator, and retains the first quantization operator in the first operator and the second dequantization operator in the second operator.

A determined quantization parameter of the first quantization operator is capable of quantizing input data into the target output range, and output data of the first quantization operator is input data of the concatenation layer. Therefore, a plurality of pieces of input data of the concatenation layer all belong to the target output range. The concatenation layer concatenates quantized data. Therefore, after the concatenation layer concatenates data, the second dequantization operator dequantizes the quantized data, so that a subsequent network layer can process dequantized data, thereby reducing an error caused by quantization.

The computer device quantizes the network parameter of the concatenation layer to obtain a quantized first model (for example, the quantized first model can be a quantized image segmentation model in the embodiments of the present disclosure), and the computer device subsequently calls the quantized first model to process data (for example, to perform an image segmentation task in the embodiments of the present disclosure). In the quantized first model, a plurality of pieces of input data of the concatenation layer all belong to the target output range, and the concatenation layer can directly concatenate input data that belongs to a same range. Therefore, the plurality of pieces of input data do not need to be converted into floating-point data first, thereby simplifying an operation process and helping improve processing efficiency of the model.

The quantized first model may be any type of model, and different types of first models can perform different tasks.

In the embodiments of the present disclosure, the first model can be a first image segmentation model, and the quantized first model can be a quantized image segmentation model. The quantized image segmentation model can be used for cutting a target area from an image. The target area can be a character area, a face area, or an area in which an environment element is located. The environment element can be an element that is included in the image and that is capable of describing an environment in which the image is captured, for example, an element such as sky, clouds, earth, or rain.

In the embodiments of the present disclosure, the computer device can capture, by using a camera, an original image including a character, and call the quantized image segmentation model to segment the original image, to obtain a target image including a character area; or

the computer device can capture, by using a camera, an original image including a face, and call the quantized image segmentation model to segment the original image, to obtain a target image including a face area; or

the computer device can capture, by using a camera, an environment image including an environment element, and call the quantized image segmentation model to segment the original image, to obtain a target image including the environment element.

In the embodiments of the present disclosure, the environment element can be sky. The computer device can capture a sky image including sky, and call the quantized image segmentation model to segment the sky image, to obtain a sky area in the sky image.

In the embodiments of the present disclosure, the first model can be a facial recognition model, and the quantized first model can be a quantized facial recognition model. The facial recognition model can be used for recognizing whether a face in an image is a target face. The computer device can acquire a face image, and call the facial recognition model to perform facial recognition on the face image, to obtain a facial recognition result, the facial recognition result indicating whether a face in the face image is a target face.

In the embodiments of the present disclosure, the first model can be a first image classification model, and the quantized first model can be a quantized image classification model. The image classification model is used for classifying an image to determine a category to which the image belongs. There are a plurality of image categories. For example, the image categories include a landscape image and a character image, and the quantified image classification model is used for classifying a landscape image and a character image. The computer device acquires a to-be-detected image from an image library, and calls the image classification model to classify the to-be-detected image to obtain a classification result, where the classification result indicates whether the to-be-detected image is a landscape image or a character image.

According to the method provided in this embodiment of this application, the quantization parameter of each operator is determined by using the input range of each operator and the target output range, so that the quantization parameter of each operator converges to the quantization parameter corresponding to the target output range. In this way, a consistency constraint is performed on output ranges of a plurality of operators by using the target output range, so that the output ranges of the operators remain the same. This is equivalent to ensuring that a plurality of input ranges and network parameter ranges of the concatenation layer are the same, thereby completing quantization of the concatenation layer.

In the embodiments of the present disclosure, because test data used in each round varies, an input range determined in each round can also vary. In each round, the computer device determines a quantization parameter of an operator with reference to an input range in the round and an input range in a previous round. This is equivalent to considering test data in two rounds, that is, an amount of information referenced during the determination of the quantization parameter of the operator is increased, thereby helping improve accuracy of determining the quantization parameter and increase a convergence speed of the quantization parameter.

In the embodiments of the present disclosure, determining the quantization parameter of the first operator based on the input range of the first operator, the input range of the second operator, and the target output range can be equivalent to broadcasting the input range of the second operator to each of the first operators, so that the quantization parameter of the first operator is constrained by using the input range of the second operator. In this way, the quantization parameter of the first operator and a quantization parameter of the second operator converge to a same value as soon as possible, thereby further increasing a convergence speed of the quantization parameters.

In the embodiments of the present disclosure, with continuous determination of the quantization parameters, during determining of the target input range, a proportion of the first input range of the first operator can be gradually reduced, and a proportion of the second input range of the second operator can be gradually increased, so that the quantization parameter of the first operator and the quantization parameter of the second operator gradually converge to a same value under a constraint of the input range of the second operator.

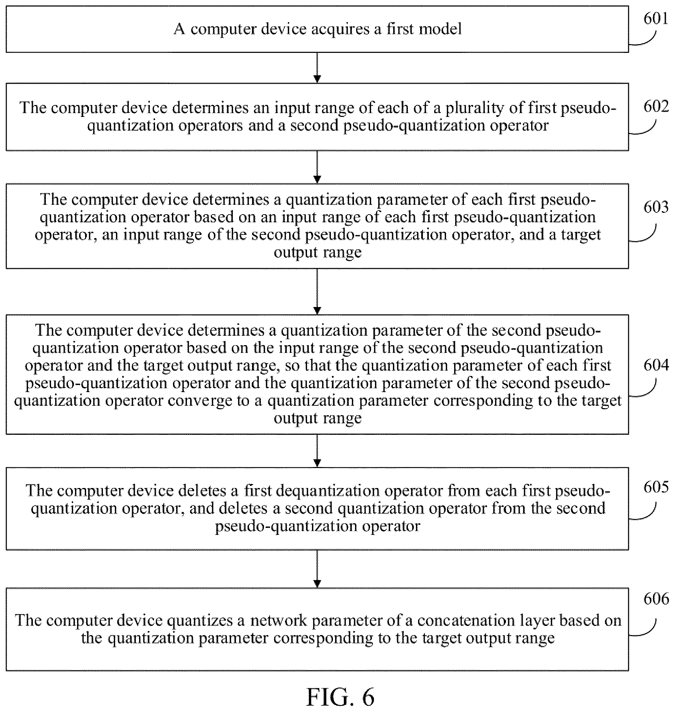

The embodiment of FIG. 3 describes the quantization of the concatenation layer of the first model through a plurality of rounds of determining the quantization parameters. In addition, the computer device may alternatively perform only one round of determining the quantization parameters to quantize the concatenation layer of the first model, and therefore no reference needs to be made to an input range in another round. For example, the computer device uses, in one round of determining the quantization parameters, all test data used in a plurality of rounds in the embodiment of FIG. 3, to complete quantization FIG. 6 is a flowchart of a model quantization method according to an embodiment of this application. In this embodiment of this application, an example in which a first operator is a first pseudo-quantization operator and a second operator is a second pseudo-quantization operator is used for description. This embodiment of this application is performed by a computer device, and the method includes the following steps:

601: The computer device acquires a first model.
602: The computer device determines an input range of each of a plurality of first pseudo-quantization operators and a second pseudo-quantization operator.

A process of step 601 and step 602 is similar to that of step 301 and step 302. Details are not described herein again.

603: The computer device determines (or called as "updates" in the embodiments of the present disclosure) a quantization parameter of each first pseudo-quantization operator based on an input range of each first pseudo-quantization operator, an input range of the second pseudo-quantization operator, and a target output range.

The computer device constrains the quantization parameter of the first pseudo-quantization operator by using the input range of the second pseudo-quantization operator, so that the quantization parameter of the first pseudo-quantization operator and a quantization parameter of the second pseudo-quantization operator converge to a same value.

In the embodiments of the present disclosure, a first weight parameter corresponding to each first pseudo-quantization operator, and a second weight parameter corresponding to the second pseudo-quantization operator can be determined; the input range of each first pseudo-quantization operator and the input range of the second pseudo-quantization operator can be weighted based on the first weight parameter and the second weight parameter, to obtain a target input range of each first pseudo-quantization operator; and the quantization parameter of each first pseudo-quantization operator can be determined based on the target input range of each first pseudo-quantization operator and the target output range, so that a determined quantization parameter is capable of quantizing data within the target input range into the target output range. In the embodiments of the present disclosure, the determined quantization parameter is capable of quantizing data within the target input range into the target output range, which can refer to that output data obtained by processing data within the target input range based on the determined quantization parameter belongs to the target output range, or can refer to that output data obtained by processing data within the target input range by the each first pseudo-quantization operator with the determined quantization parameter belongs to the target output range. A process of determining the target input range based on the input range of the first pseudo-quantization operator and the input range of the second pseudo-quantization operator is the same as the process of determining the target input range based on the first input range and the second input range in step 303. Details are not described herein again. A process of determining the quantization parameter based on the target input range and the target output range is similar to the process of determining the quantization parameter based on the target input range and the target output range in step 303. Details are not described herein again.

604: The computer device determines a quantization parameter of the second pseudo-quantization operator based on the input range of the second pseudo-quantization operator and the target output range. In the embodiments of the present disclosure, above step 603 and step 604 are performed, so that the quantization parameter of each first pseudo-quantization operator and the quantization parameter of the second pseudo-quantization operator converge to a quantization parameter corresponding to the target output range. In the embodiments of the present disclosure, the quantization parameter of each first pseudo-quantization operator and the quantization parameter of the second pseudo-quantization operator converge to a quantization parameter corresponding to the target output range, which can refer to that output data obtained based on the quantization parameter (for example, the quantization parameter of each first pseudo-quantization operator and the quantization parameter of the second pseudo-quantization operator) belongs to the target output range, or can refer to that output data obtained by each operator of the first pseudo-quantization operators and the second pseudo-quantization operator with the quantization parameter (for example, the quantization parameter of each first pseudo-quantization operator and the quantization parameter of the second pseudo-quantization operator) belongs to the target output range.

A process of determining the quantization parameter of the second pseudo-quantization operator based on the input range of the second pseudo-quantization operator and the target output range in step 604 is similar to the process of determining the quantization parameters of the second pseudo-quantization operator based on the second input range and the target output range in step 304. Details are not described herein again.

By performing step 603 and step 604, the computer device determines a quantization parameter of each operator based on an input range of each operator and the target output range, so that the quantization parameter of each operator converges to the quantization parameter corresponding to the target output range. In addition, the computer device may alternatively determine the quantization parameters in a manner different from that in step 603 and step 604. For example, the computer device determines a target first pseudo-quantization operator from the plurality of first pseudo-quantization operators, and constrains a quantization parameter of another first pseudo-quantization operator and the quantization parameter of the second pseudo-quantization operator based on an input range of the target first operator.

605: The computer device deletes a first dequantization operator from each first pseudo-quantization operator, and deletes a second quantization operator from the second pseudo-quantization operator.

606: The computer device quantizes a network parameter of a concatenation layer based on the quantization parameter corresponding to the target output range.

A process of step 605 and step 606 is similar to that of step 305. Details are not described herein again.

According to the method provided in this embodiment of this application, the quantization parameter of each operator is determined by using the input range of each operator and the target output range, so that the quantization parameter of each operator converges to the quantization parameter corresponding to the target output range. In this way, a consistency constraint is performed on output ranges of a plurality of operators by using the target output range, so that the output ranges of the operators remain the same. This is equivalent to ensuring that a plurality of input ranges and network parameter ranges of the concatenation layer are the same, thereby completing quantization of the concatenation layer.

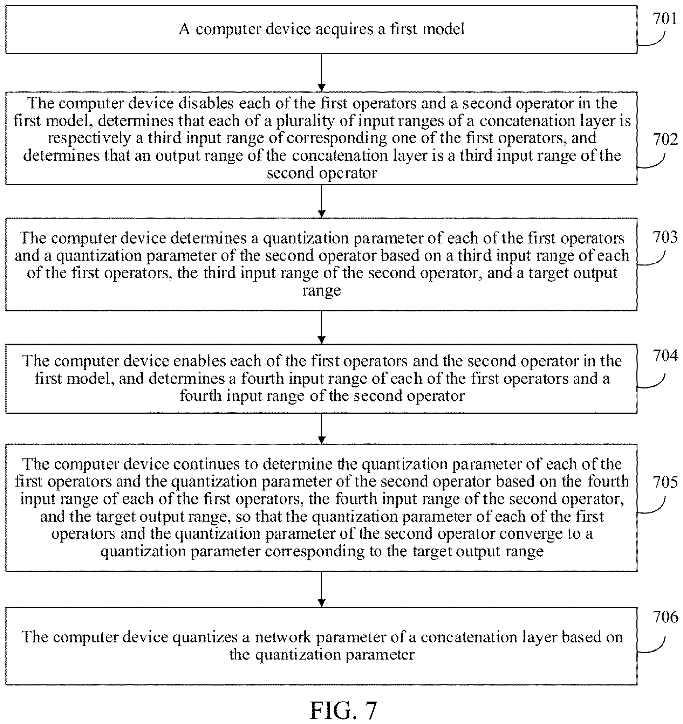

In the embodiments of FIG. 3 and FIG. 6, the quantization parameter of the first operator and the quantization parameter of the second operator are determined in a case that the first operator and the second operator in the first model are enabled. In another embodiment, to ensure accuracy of a determined input range, the first operator and the second operator may be disabled first, and a determining operation is performed; and then the first operator and the second operator are enabled, and a determining operation is performed, as shown in FIG. 7. FIG. 7 is a flowchart of a model quantization method according to an embodiment of this application. This embodiment of this application is performed by a computer device, and the method includes the following steps:

701: The computer device acquires a first model.

A process of step 701 is similar to that of step 301. Details are not described herein again.

702: The computer device disables each of the first operators and a second operator in the first model, determines that each of a plurality of input ranges of a concatenation layer is respectively a third input range of corresponding one of the first operators, and determines that an output range of the concatenation layer is a third input range of the second operator.

The computer device disables each of the first operators and the second operator in the first model. When the computer device calls the first model to process data, output data of a network layer located before the first operator is directly processed by the concatenation layer, the first operator does not process the output data of the network layer located before the first operator, and the second operator does not process output data of the concatenation layer either. Instead, a network layer located after the second operator continues to process the output data of the concatenation layer. For example, in the first model shown in FIG. 5, after each of the first operators and the second operator is disabled, that is, after each pseudo-quantization operator is disabled, output data of the convolutional layer 501, the convolutional layer 502 and the convolutional layer 503 is directly inputted to the concatenation layer 504.

After disabling each of the first operators and the second operator, the computer device determines a plurality of input ranges of the concatenation layer and an output range of the concatenation layer. Because the concatenation layer correspondingly has a plurality of pieces of input data, value ranges to which the plurality of pieces of input data belong are the plurality of input ranges of the concatenation layer. The plurality of pieces of input data are in a one-to-one correspondence with a plurality of first operators. Therefore, it may be determined that each of the plurality of input ranges of the concatenation layer is respectively a third input range of corresponding one of the first operators. Because the output data of the concatenation layer is input data of the second operator, it may be determined that the output range of the concatenation layer is the third input range of the second operator. For example, in the first model shown in FIG. 5, output data of each convolutional layer is input data of the concatenation layer 504, the concatenation layer 504 correspondingly has three pieces of input data, output data of the convolutional layer 501 corresponds to the pseudo-quantization operator 505, output data of the convolutional layer 502 corresponds to the pseudo-quantization operator 506, and output data of the convolutional layer 503 corresponds to the pseudo-quantization operator 507.

In the embodiments of the present disclosure, the computer device can acquire a plurality of pieces of test data, and calls the first model in which the plurality of first operators and the second operator are disabled to process the plurality of pieces of test data, so as to determine the plurality of input ranges of the concatenation layer and the output range of the concatenation layer. A process of this step is similar to the process of determining the input range of each operator in step 302. A difference lies in that, because the first operator and the second operator are disabled in step 702, during processing performed by the first model on each piece of test data, the data does not need to go through the first operator and the second operator, but a plurality of pieces of test data are separately inputted to the concatenation layer. The computer device collects statistics on values of the plurality of pieces of data inputted to the concatenation layer, and determines the plurality of input ranges of the concatenation layer based on the values of the plurality of pieces of data, so that the plurality of input ranges of the concatenation layer are used as the third input ranges of the plurality of first operators. In this way, a scenario in which "data passes through the first operator but the first operator does not process the data" can be simulated. Similarly, the computer device on values of data outputted by the concatenation layer, and determines the output range of the concatenation layer, so that the output range of the concatenation layer is used as the third input range of the second operator. In this way, a scenario in which "data passes through the second operator but the second operator does not process the data" can be simulated.

703: The computer device determines (or called as "updates" in the embodiments of the present disclosure) a quantization parameter of each of the first operators and a quantization parameter of the second operator based on a third input range of each of the first operators, the third input range of the second operator, and a target output range.

A process of step 703 is similar to that of step 603 and step 604. Details are not described herein again.

704: The computer device enables each of the first operators and the second operator in the first model, and determines a fourth input range of each of the first operators and a fourth input range of the second operator.

After the computer device determines the quantization parameter of the first operator and the quantization parameter of the second operator in a case that the first operator and the second operator are disabled, the computer device re-enables each of the first operators and the second operator in the first model. When the computer device calls the first model to process data, output data of a network layer located before the first operator is first processed by the first operator, and then output data of the first operator is processed by the concatenation layer; and output data of the concatenation layer is first processed by the second operator, and then a network layer located after the second operator continues to process output data of the second operator. After enabling each of the first operators and the second operator, the computer device re-determines the fourth input range of each of the first operators and the fourth input range of the second operator. A process of this step is similar to the process of determining the input range of each operator in step 302. Details are not described herein again.

705: The computer device continues to determine (or called as "redetermine" or "update" in the embodiments of the present disclosure) the quantization parameter of each of the first operators and the quantization parameter of the second operator based on the fourth input range of each of the first operators, the fourth input range of the second operator, and the target output range, so that the quantization parameter of each of the first operators and the quantization parameter of the second operator converge to a quantization parameter corresponding to the target output range. In the embodiments of the present disclosure, the quantization parameter of each of the first operators and the quantization parameter of the second operator converge to a quantization parameter corresponding to the target output range, which can refer to that output data obtained based on the determined quantization parameter (for example, the quantization parameter of each of the first operators and the quantization parameter of the second operator in the embodiments of the present disclosure) belongs to the target output range, or can refer to that output data obtained by each operator of the first operators and the second operator with the determined quantization parameter (for example, the quantization parameter of each of the first operators and the quantization parameter of the second operator in the embodiments of the present disclosure) belongs to the target output range.

The quantization parameter corresponding to the target output range is used for quantizing any data into the target output range. A process of this step is similar to that of step 603 and step 604. Details are not described herein again.

In the embodiments of the present disclosure, in a case that the first operator and the second operator are disabled, the first operator and the second operator do not process data, and the third input ranges of the first operator and the second operator that are determined in this case are not affected by the first operator and the second operator, thereby reducing an error caused by processing data by the first operator and the second operator. Therefore, the third input ranges determined by the computer device are more accurate, and quantization parameters determined based on the third input ranges are more accurate. Then the first operator and the second operator whose quantization parameters are determined are enabled, and the more accurate quantization parameters are used for processing data, to obtain new input ranges and continue to determine the quantization parameters. This helps improve accuracy of an entire quantization parameter determination process. For example, in this embodiment of this application, the first operator and the second operator are pseudo-quantization operators, and a pseudo-quantization operator includes a quantization operator and a dequantization operator. Therefore, both the first operator and the second operator need to first quantize data and then dequantize data. In this process, an error is caused by quantization, and consequently, a determined input range is inaccurate. Therefore, in this embodiment of this application, the first operator and the second operator are first disabled for determining input ranges of the first operator and the second operator, thereby avoiding an error caused by quantization and making a quantization parameter determination process more accurate.

In the embodiments of the present disclosure, one round can be merely used as an example for description. In the embodiments of the present disclosure, the computer device can repeatedly perform step 702 to step 705 to determine the quantization parameter of the first operator and the quantization parameter of the second operator for a plurality of times through a plurality of rounds, so that the quantization parameter of each of the first operators and the quantization parameter of the second operator converge to the quantization parameter corresponding to the target output range. In addition, when the quantization parameters are determined based on input ranges in each round, input ranges in the round and input ranges in a previous round may be comprehensively considered. A detailed process is similar to the determining process based on input ranges in two rounds in the embodiment of FIG. 3. Details are not described herein again.

706: The computer device quantizes a network parameter of a concatenation layer based on the quantization parameter. In the embodiments of the present disclosure, above quantization parameter corresponds to the target output range. In the embodiments of the present disclosure, above quantization parameter, which are used to quantize a network parameter of the concatenation layer can include the determined quantization parameter of each of the first operators in step 705, or include the determined quantization parameter of each of the first operators and the determined quantization parameter of the second operator in step 705..

A process of step 706 is similar to that of step 305. Details are not described herein again.

According to the method provided in this embodiment of this application, the quantization parameter of each operator is determined by using the input range of each operator and the target output range, so that the quantization parameter of each operator converges to the quantization parameter corresponding to the target output range. In this way, a consistency constraint is performed on output ranges of a plurality of operators by using the target output range, so that the output ranges of the operators remain the same. This is equivalent to ensuring that a plurality of input ranges and network parameter ranges of the concatenation layer are the same, thereby completing quantization of the concatenation layer. In addition, in a case that the first operator and the second operator are disabled, the third input ranges of the first operator and the second operator that are determined in this case are not affected by the first operator and the second operator, thereby reducing an error caused by processing data by the first operator and the second operator. Therefore, the third input ranges determined by the computer device are more accurate, and quantization parameters determined based on the third input ranges are more accurate. Then the first operator and the second operator whose quantization parameters are determined are enabled, and the more accurate quantization parameters are used for processing data, to obtain new input ranges and continue to determine the quantization parameters. This helps improve accuracy of an entire quantization parameter determination process.

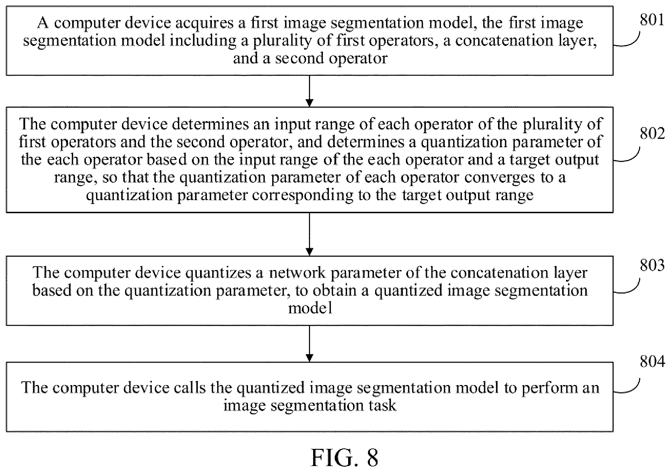

The foregoing embodiments are applied to a scenario in which any type of first model including a concatenation layer is quantized. For example, the first model is a first image segmentation model, and the first image segmentation model is used for segmenting an image. FIG. 8 is a flowchart of an image segmentation model quantization method according to an embodiment of this application. In the embodiments of the present disclosure, as shown in FIG. 8, the method can include the following steps:

801: A computer device acquires a first image segmentation model, the first image segmentation model including a plurality of first operators, a concatenation layer, and a second operator.

802: The computer device determines an input range of each operator of the plurality of first operators and the second operator, and determines (or called as "updates" in the embodiments of the present disclosure) a quantization parameter of the each operator based on the input range of the each operator and a target output range, so that the quantization parameter of each operator converges to a quantization parameter corresponding to the target output range. In the embodiments of the present disclosure, the quantization parameter of each operator converges to a quantization parameter corresponding to the target output range, which can refer to that output data obtained based on the determined quantization parameter (for example, the determined quantization parameter of each operator of the plurality of first operators and the second operator in the embodiments of the present disclosure) belongs to the target output range, or can refer to that output data obtained by the each operator (for example, each operator of the first operators and the second operator) with the determined quantization parameter (for example, the determined quantization parameter of each operator of the plurality of first operators and the second operator in the embodiments of the present disclosure) belongs to the target output range.

803: The computer device quantizes a network parameter of the concatenation layer based on the quantization parameter, to obtain a quantized image segmentation model. In the embodiments of the present disclosure, above quantization parameter corresponds to the target output range. In the embodiments of the present disclosure, above quantization parameter, which are used to quantize a network parameter of the concatenation layer can include the determined quantization parameter of each of the first operators, or include the determined quantization parameter of each of the first operators and the determined quantization parameter of the second operator. In the embodiments of the present disclosure, above quantized image segmentation model is used for performing an image segmentation task.

In the embodiments of the present disclosure, after step 803, the method further includes step 804: The computer device calls the quantized image segmentation model to perform an image segmentation task.
In the embodiments of the present disclosure, in a case that the image segmentation model can be used for cutting a character area from an image, the computer device can capture, by using the camera, an original image including a character, and call the quantized image segmentation model to segment the original image, to obtain a target image including only a character area, so as to implement segmentation of the image.
In the embodiments of the present disclosure, in a case that the image segmentation model can be used for cutting a face area from an image, the computer device can capture, by using the camera, an original image including a face, and call the quantized image segmentation model to segment the original image, to obtain a target image including a face area, so as to implement segmentation of the image. In the embodiments of the present disclosure, facial recognition may be subsequently performed based on the target image, to determine whether the face area in the target image is a target face; or other processing is performed on the target image.
In the embodiments of the present disclosure, in a case that the image segmentation model can be used for cutting an environment element, the computer device can capture, by using the camera, an environment image including an environment element, and call the quantized image segmentation model to segment the original image, to obtain a target image including the environment element. In the embodiments of the present disclosure, the environment element can be sky. In this case, the camera is used to capture a sky image including sky, and the quantized image segmentation model is called to segment the sky image, to obtain a sky area in the sky image.
In the embodiments of the present disclosure, the image segmentation model can be used as an example for description. A specific process of steps 801 to 804 is similar to those in the embodiments shown in FIG. 2 to FIG. 7, and details are not described herein again.
According to the method provided in this embodiment of this application, the quantization parameter of each operator is determined by using the input range of each operator and the target output range, so that the quantization parameter of each operator converges to the quantization parameter corresponding to the target output range. In this way, a consistency constraint is performed on output ranges of a plurality of operators by using the target output range, so that the output ranges of the operators remain the same. This is equivalent to ensuring that a plurality of input ranges and network parameter ranges of the concatenation layer are the same, thereby completing quantization of the concatenation layer. In addition, integer data does not need to be converted into floating-point data, thereby helping improve processing efficiency of an image segmentation model, and therefore improving image segmentation efficiency.

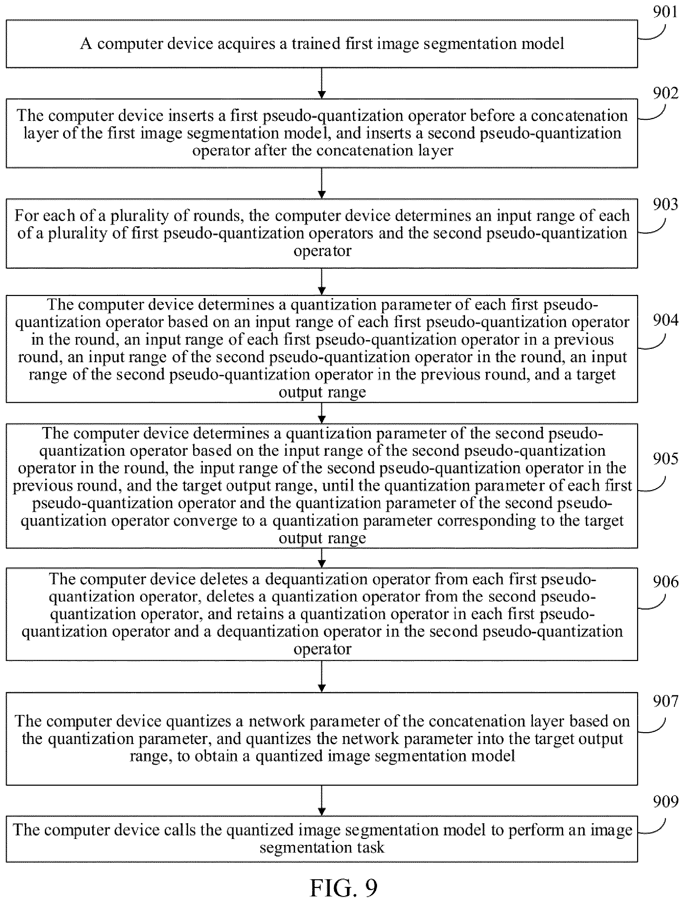

FIG. 9 is a flowchart of another image segmentation model quantization method according to an embodiment of this application. In the embodiments of the present disclosure, as shown in FIG. 9, the method can include the following steps:

901: A computer device acquires a trained first image segmentation model.

902: The computer device inserts a first pseudo-quantization operator before a concatenation layer of the first image segmentation model, and inserts a second pseudo-quantization operator after the concatenation layer.

903: For each of a plurality of rounds, the computer device determines an input range of each of a plurality of first pseudo-quantization operators and the second pseudo-quantization operator.

The computer device calls the first image segmentation model to process a plurality of pieces of test data to determine the input range of each pseudo-quantization operator. For example, the plurality of pieces of test data are a plurality of images captured by a camera. For example, each image includes a character area and a background area. The first image segmentation model segments the image to cut the character area and the background area from the image.

904: The computer device determines a quantization parameter of each first pseudo-quantization operator based on an input range of each first pseudo-quantization operator in the round, an input range of each first pseudo-quantization operator in a previous round, an input range of the second pseudo-quantization operator in the round, an input range of the second pseudo-quantization operator in the previous round, and a target output range.

905: The computer device determines a quantization parameter of the second pseudo-quantization operator based on the input range of the second pseudo-quantization operator in the round, the input range of the second pseudo-quantization operator in the previous round, and the target output range, until the quantization parameter of each first pseudo-quantization operator and the quantization parameter of the second pseudo-quantization operator converge to a quantization parameter corresponding to the target output range. In the embodiments of the present disclosure, the quantization parameter of each first pseudo-quantization operator and the quantization parameter of the second pseudo-quantization operator converge to a quantization parameter corresponding to the target output range, which can refer to that output data obtained based on the determined quantization parameter (for example, the quantization parameter of each first pseudo-quantization operator and the quantization parameter of the second pseudo-quantization operator in the embodiments of the present disclosure) belongs to the target output range, or can refer to that output data obtained by each operator of the first pseudo-quantization operators and the second pseudo-quantization operator with the determined quantization parameter (for example, the quantization parameter of each first pseudo-quantization operator and the quantization parameter of the second pseudo-quantization operator in the embodiments of the present disclosure) belongs to the target output range.

906: The computer device deletes a dequantization operator from each first pseudo-quantization operator, deletes a quantization operator from the second pseudo-quantization operator, and retains a quantization operator in each first pseudo-quantization operator and a dequantization operator in the second pseudo-quantization operator.

907: The computer device quantizes a network parameter of the concatenation layer based on the quantization parameter, and quantizes the network parameter into the target output range, to obtain a quantized image segmentation model. In the embodiments of the present disclosure, above quantization parameter corresponds to the target output range. In the embodiments of the present disclosure, above quantization parameter, which are used to quantize a network parameter of the concatenation layer can include the quantization parameter of each first pseudo-quantization operator, or include the quantization parameter of each first pseudo-quantization operator and the quantization parameter of the second pseudo-quantization operator. In the embodiments of the present disclosure, the quantized image segmentation model can be used for performing an image segmentation task.

In the embodiments of the present disclosure, after step 907, the method can further include step 909: The computer device calls the quantized image segmentation model to perform an image segmentation task.

In the embodiments of the present disclosure, in a case that the image segmentation model can be used for cutting a character area from an image, the computer device can capture, by using the camera, an original image including a character, and call the quantized image segmentation model to segment the original image, to obtain a target image including only a character area, so as to implement segmentation of the image.

In the embodiments of the present disclosure, in a case that the image segmentation model can be used for cutting a face area from an image, the computer device can capture, by using the camera, an original image including a face, and call the quantized image segmentation model to segment the original image, to obtain a target image including a face area, so as to implement segmentation of the image. In the embodiments of the present disclosure, facial recognition may be subsequently performed based on the target image, to determine whether the face area in the target image is a target face; or other processing is performed on the target image.

In the embodiments of the present disclosure, in a case that the image segmentation model can be used for cutting an environment element, the computer device can capture, by using the camera, an environment image including an environment element, and call the quantized image segmentation model to segment the original image, to obtain a target image including the environment element. In the embodiments of the present disclosure, the environment element can be sky. In this case, the camera can be used to capture a sky image including sky, and the quantized image segmentation model can be called to segment the sky image, to obtain a sky area in the sky image.

In the embodiments of the present disclosure, to improve operation efficiency of the concatenation layer in the image segmentation model, the first pseudo-quantization operator and the second pseudo-quantization operator can be inserted before and after the concatenation layer respectively, for performing quantization perception training. In addition, the input range of the second pseudo-quantization operator after the concatenation layer is broadcast to the first pseudo-quantization operator before the concatenation layer, so that a consistency constraint is performed on the input range of each first pseudo-quantization operator by using the input range of the second pseudo-quantization operator. In this way, the quantization parameter of each first pseudo-quantization operator and the quantization parameter of the second pseudo-quantization operator are the same, so that a plurality of pieces of integer data inputted to the concatenation layer all belong to a same range, and the integer data does not need to be converted into floating-point data, thereby helping improve processing efficiency of the model.

In addition to the image segmentation model, the first model may alternatively be any type of neural network model, such as a facial recognition model, an image classification model, a speech recognition model, or an image denoising model. This is not limited in this embodiment of this application. For example, the quantized first model is a first facial recognition model, and the first facial recognition model is used for performing a facial recognition task, where the facial recognition task is to recognize whether a face in an image is a target face. That the computer device performs a facial recognition task includes: acquiring a face image, and calling a facial recognition model obtained by quantizing the facial recognition model to perform facial recognition on the face image, to obtain a facial recognition result, the facial recognition result indicating whether a face in the face image is a target face.

For example, the quantized first model is a first image classification model, and the first image classification model is used for performing an image classification task to determine a category to which an image belongs. There are a plurality of image categories. For example, the image categories include a landscape image and a character image, and the quantified image classification model is used for classifying a landscape image and a character image. The computer device acquires a to-be-detected image from an image library, and calls the image classification model to classify the to-be-detected image to obtain a classification result, where the classification result indicates whether the to-be-detected image is a landscape image or a character image.

To verify feasibility of this embodiment of this application, a floating-point model used for image segmentation is acquired. The floating-point model includes at least one concatenation layer, and the at least one concatenation layer is not quantized, and can process only floating-point data. The floating-point model is quantized by using the method in this embodiment of this application, to obtain an 8-bit quantization model. The floating-point model and the 8-bit quantization model are called to process a same batch of data, and processing results are shown in Table 1 below.

**Table 1**

| Model | Contour boundary IOU | Overall IOU |
|---|---|---|
| Floating-point model | 0.5857 | 0.8336 |
| 8-bit quantization model | 0.5861 | 0.8365 |

A processing speed of the 8-bit quantization model is higher than that of the floating-point model. The intersection over union (IOU) is a criterion for measuring accuracy. The contour boundary IOU indicates a degree of overlapping between a contour of an image obtained through segmentation by the model and a contour of a real image. The overall IOU indicates a degree of overall overlapping between the image obtained through segmentation by the model and the real image. It can be learned from Table 1 that accuracy of the 8-bit quantization model is higher than that of the floating-point model.

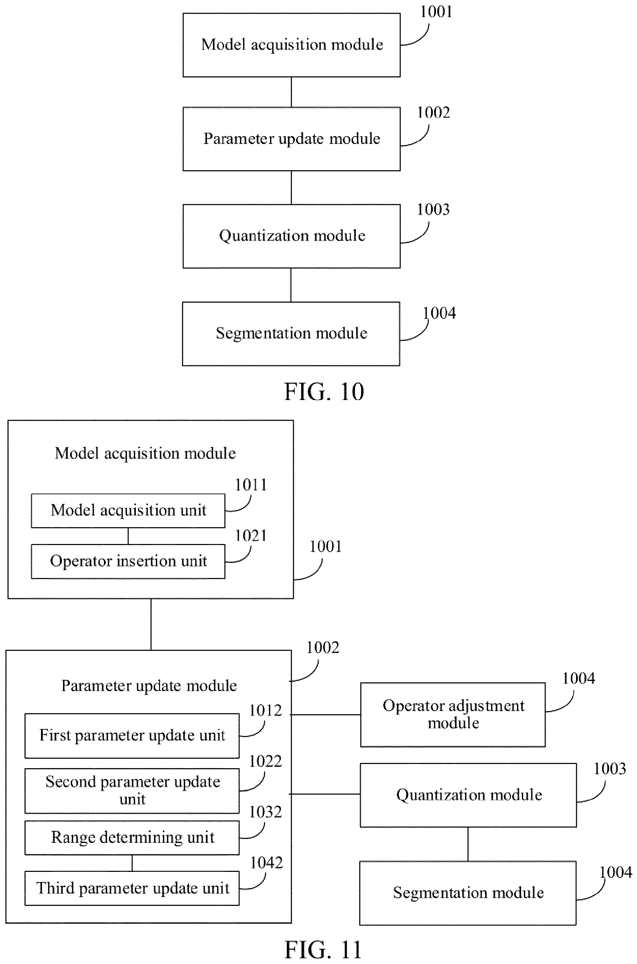

FIG. 10 is a schematic structural diagram of an image segmentation model quantization apparatus according to an embodiment of this application. In the embodiments of the present disclosure, as shown in FIG. 10, the apparatus can include:

a model acquisition module 1001, configured to acquire a first image segmentation model, the first image segmentation model including a plurality of first operators, a concatenation layer, and a second operator, an output of each of the first operators being an input of the concatenation layer, and an output of the concatenation layer being an input of the second operator;

a parameter update module 1002, configured to determine an input range of each operator of the plurality of first operators and the second operator, and determine a quantization parameter of the each operator based on the input range of the each operator and a target output range, so that the quantization parameter of each operator converges to a quantization parameter corresponding to the target output range, the quantization parameter corresponding to the target output range being used for quantizing any data into the target output range; in the embodiments of the present disclosure, the quantization parameter of each operator converges to a quantization parameter corresponding to the target output range, which can refer to that output data obtained based on the determined quantization parameter (for example, the determined quantization parameter of the each operator of the plurality of first operators and the second operator in the embodiments of the present disclosure) belongs to the target output range, or can refer to that output data obtained by the each operator of the first operators and the second operator with the determined quantization parameter (for example, the determined quantization parameter of the each operator of the plurality of first operators and the second operator in the embodiments of the present disclosure) belongs to the target output range;

a quantization module 1003, configured to quantize a network parameter of the concatenation layer based on the quantization parameter, to obtain a quantized image segmentation model; in the embodiments of the present disclosure, above quantization parameter corresponds to the target output range. In the embodiments of the present disclosure, above quantization parameter, which are used to quantize a network parameter of the concatenation layer can include the determined quantization parameter of each of the first operators, or include the determined quantization parameter of each of the first operators and the determined quantization parameter of the second operator. In the embodiments of the present disclosure, the quantized image segmentation model can be used for performing an image segmentation task;and

a segmentation module 1004, configured to call the quantized image segmentation model to perform an image segmentation task.

According to the image segmentation model quantization apparatus provided in this embodiment of this application, the quantization parameter of each operator is determined by using the input range of each operator and the target output range, so that the quantization parameter of each operator converges to the quantization parameter corresponding to the target output range. In this way, a consistency constraint is performed on output ranges of a plurality of operators by using the target output range, so that the output ranges of the operators remain the same. This is equivalent to ensuring that a plurality of input ranges and network parameter ranges of the concatenation layer are the same, thereby completing quantization of the concatenation layer. In addition, integer data does not need to be converted into floating-point data, thereby helping improve processing efficiency of an image segmentation model, and therefore improving image segmentation efficiency.

In the embodiments of the present disclosure, the segmentation module 1004 can be configured to:

capture, by using a camera, an original image including a character, and call the quantized image segmentation model to segment the original image, to obtain a target image including a character area; or

capture, by using a camera, an original image including a face, and call the quantized image segmentation model to segment the original image, to obtain a target image including a face area; or

capture, by using a camera, an environment image including an environment element, and call the quantized image segmentation model to segment the original image, to obtain a target image including the environment element.

In the embodiments of the present disclosure, as shown in FIG. 11, the parameter update module 1002 can include:

a first parameter update unit 1012, configured to determine a quantization parameter of each of the first operators based on an input range of each of the first operators, an input range of the second operator, and the target output range; and

a second parameter update unit 1022, configured to determine a quantization parameter of the second operator based on the input range of the second operator and the target output range. In the embodiments of the present disclosure, the first parameter update unit 1012 determines a quantization parameter of each of the first operators, and the second parameter update unit 1022 determines a quantization parameter of the second operator, so that the quantization parameter of each of the first operators and the quantization parameter of the second operator converge to the quantization parameter corresponding to the target output range. In the embodiments of the present disclosure, the quantization parameter of each of the first operators and the quantization parameter of the second operator converge to the quantization parameter corresponding to the target output range, which can refer to that output data obtained based on the determined quantization parameter (for example, the determined quantization parameter of the each operator of the plurality of first operators and the second operator in the embodiments of the present disclosure) belongs to the target output range, or can refer to that output data obtained by the each operator of the plurality of first operators and the second operator with the determined quantization parameter (for example, the determined quantization parameter of the each operator of the plurality of first operators and the second operator in the embodiments of the present disclosure) belongs to the target output range.

In the embodiments of the present disclosure, as shown in FIG. 11, the parameter update module 1002 can include:

a range determining unit 1032, configured to: for each of a plurality of rounds, determine an input range of each operator in the round; and

a third parameter update unit 1042, configured to determine the quantization parameter of each operator based on the input range of each operator in the round, an input range of each operator in a previous round of the round, and the target output range, so that the quantization parameter of each operator converges to the quantization parameter corresponding to the target output range. In the embodiments of the present disclosure, the quantization parameter of each operator converges to the quantization parameter corresponding to the target output rang, which can refer to that output data obtained based on the determined quantization parameter (for example, the determined quantization parameter of the each operator of the plurality of first operators and the second operator in the embodiments of the present disclosure) belongs to the target output range, or can refer to that output data obtained by the each operator of the plurality of first operators and the second operator with the determined quantization parameter (for example, the determined quantization parameter of the each operator of the plurality of first operators and the second operator in the embodiments of the present disclosure) belongs to the target output range.

In the embodiments of the present disclosure, as shown in FIG. 11, the range determining unit 1032 can be configured to call the first image segmentation model to process a plurality of pieces of test data corresponding to the round, to determine the input range of each operator in the round, a plurality of pieces of test data corresponding to each round varying.

In the embodiments of the present disclosure, as shown in FIG. 11, the third parameter update unit 1042 can be configured to:

determine a quantization parameter of each of the first operators based on an input range of each of the first operators in the round, an input range of each of the first operators in the previous round, an input range of the second operator in the round, an input range of the second operator in the previous round, and the target output range; and

determine a quantization parameter of the second operator based on the input range of the second operator in the round, the input range of the second operator in the previous round, and the target output range, until the quantization parameter of each of the first operators and the quantization parameter of the second operator converge to the quantization parameter corresponding to the target output range. In the embodiments of the present disclosure, the quantization parameter of each of the first operators and the quantization parameter of the second operator converge to the quantization parameter corresponding to the target output range, which can refer to that output data obtained based on the determined quantization parameter (for example, the determined quantization parameter of the each operator of the plurality of first operators and the second operator in the embodiments of the present disclosure) belongs to the target output range, or can refer to that output data obtained by the each operator of the plurality of first operators and the second operator with the determined quantization parameter (for example, the determined quantization parameter of the each operator of the plurality of first operators and the second operator in the embodiments of the present disclosure) belongs to the target output range.

In the embodiments of the present disclosure, as shown in FIG. 11, the third parameter update unit 1042 can be configured to:

weight the input range of each of the first operators in the round and the input range of each of the first operators in the previous round, to obtain a first input range of each of the first operators;

weight the input range of the second operator in the round and the input range of the second operator in the previous round, to obtain a second input range of the second operator; and

determine the quantization parameter of each of the first operators based on the first input range of each of the first operators, the second input range, and the target output range.

In the embodiments of the present disclosure, as shown in FIG. 11, the third parameter update unit 1042 can be configured to:

determine a first weight parameter corresponding to each of the first operators, and a second weight parameter corresponding to the second operator, the first weight parameter being negatively correlated with the number of times of determining the quantization parameter, and the second weight parameter being positively correlated with the number;

weight the first input range of each of the first operators and the second input range based on the first weight parameter and the second weight parameter, to obtain a target input range of each of the first operators; and

determine the quantization parameter of each of the first operators based on the target input range of each of the first operators and the target output range, so that a determined quantization parameter is capable of quantizing data within the target input range into the target output range. In the embodiments of the present disclosure, the determined quantization parameter is capable of quantizing data within the target input range into the target output range, which can refer to that output data obtained by processing data within the target input range based on the determined quantization parameter belongs to the target output range, or can refer to that output data obtained by processing data within the target input range by the each of the first operators with the determined quantization parameter belongs to the target output range.

In the embodiments of the present disclosure, as shown in FIG. 11, the third parameter update unit 1042 can be configured to:

for each of the first operators, weight, based on a first weight parameter of the first operator and the second weight parameter, a minimum value within a first input range of the first operator and a minimum value within the second input range, to obtain a target minimum value;

weight, based on the first weight parameter and the second weight parameter, a maximum value within the first input range and a maximum value within the second input range, to obtain a target maximum value; and

determine that a range between the target minimum value and the target maximum value is a target input range of the first operator.

In the embodiments of the present disclosure, as shown in FIG. 11, the first operator can include a first quantization parameter, and the third parameter update unit 1042 can be configured to:

for each of the first operators, determine a first difference between a maximum value and a minimum value within a target input range of the first operator;

determine a second difference between a maximum value and a minimum value within the target output range; and

determine that a ratio of the first difference to the second difference is a determined first quantization parameter of the first operator, the first quantization parameter indicating a scaling ratio of data.

In the embodiments of the present disclosure, as shown in FIG. 11, the first operator further can include a second quantization parameter, and the third parameter update unit 1042 can be configured to:

round a ratio of the minimum value within the target input range to the determined first quantization parameter, to obtain a reference minimum value; and

determine that a difference between the minimum value within the target output range and the reference minimum value is a determined second quantization parameter of the first operator, the second quantization parameter indicating a shift magnitude of data.

In the embodiments of the present disclosure, as shown in FIG. 11, the third parameter update unit 1042 can be configured to:

weight the input range of the second operator in the round and the input range of the second operator in the previous round, to obtain a second input range of the second operator; and

determine the quantization parameter of the second operator based on the second input range of the second operator and the target output range, so that a determined quantization parameter is capable of quantizing data within the second input range into the target output range. In the embodiments of the present disclosure, the determined quantization parameter is capable of quantizing data within the second input range into the target output range, which can refer to that output data obtained by processing data within the second input range based on the determined quantization parameter belongs to the target output range, or can refer to that output data obtained by processing data within the second input range by the second operator with the determined quantization parameter belongs to the target output range.

In the embodiments of the present disclosure, as shown in FIG. 11, the parameter update module 1002 can include:

a range determining unit 1032, configured to disable each of the first operators and the second operator in the first image segmentation model, determine that each of a plurality of input ranges of the concatenation layer is respectively a third input range of corresponding one of the first operators, and determine that an output range of the concatenation layer is a third input range of the second operator; and

a third parameter update unit 1042, configured to determine a quantization parameter of each of the first operators and a quantization parameter of the second operator based on a third input range of each of the first operators, the third input range of the second operator, and the target output range,

the range determining unit 1032 being further configured to enable each of the first operators and the second operator in the first image segmentation model, and determine a fourth input range of each of the first operators and a fourth input range of the second operator; and

the third parameter update unit 1042 being configured to continue to determine the quantization parameter of each of the first operators and the quantization parameter of the second operator based on the fourth input range of each of the first operators, the fourth input range of the second operator, and the target output range, so that the quantization parameter of each of the first operators and the quantization parameter of the second operator converge to the quantization parameter corresponding to the target output range. In the embodiments of the present disclosure, the quantization parameter of each of the first operators and the quantization parameter of the second operator converge to the quantization parameter corresponding to the target output range, which can refer to that output data obtained based on the determined quantization parameter (for example, the determined quantization parameter of the each operator of the plurality of first operators and the second operator in the embodiments of the present disclosure) belongs to the target output range, or can refer to that output data obtained by the each operator of the plurality of first operators and the second operator with the determined quantization parameter (for example, the determined quantization parameter of the each operator of the plurality of first operators and the second operator in the embodiments of the present disclosure) belongs to the target output range.

In the embodiments of the present disclosure, as shown in FIG. 11, the first operator can include a first quantization operator and a first dequantization operator, and the apparatus can further include:
an operator adjustment module 1004, configured to delete the first dequantization operator from each of the first operators, and delete the second quantization operator from the second operator.

In the embodiments of the present disclosure, as shown in FIG. 11, the parameter update module 1002 can include:

a range determining unit 1032, configured to acquire association information of the concatenation layer, the association information indicating a plurality of first operators located before the concatenation layer and the second operator located after the concatenation layer,

the range determining unit 1032 being further configured to determine the plurality of first operators and the second operator based on the association information; and

the range determining unit 1032 being further configured to determine an input range of each of the plurality of the first operators and an input range of the second operator.

In the embodiments of the present disclosure, as shown in FIG. 11, the model acquisition module 1001 can include:

a model acquisition unit 1011, configured to acquire a second image segmentation model, the second image segmentation model including a plurality of network layers that are connected sequentially, the plurality of network layers including at least the concatenation layer and a plurality of first network layers, and the first network layers being network layers that are connected to the concatenation layer and that are located before the concatenation layer; and

an operator insertion unit 1021, configured to insert the first operator between the concatenation layer and each of the first network layers, and insert the second operator after the concatenation layer, to obtain the first image segmentation model.

In a case that the image segmentation model quantization apparatus provided in the foregoing embodiment quantizes a model, the division of the foregoing functional modules is merely used as an example for description. In practical application, the functions may be allocated to and completed by different functional modules according to requirements. That is, an internal structure of a computer device is divided into different functional modules, to complete all or some of the functions described above. In addition, the image segmentation model quantization apparatus provided in the foregoing embodiment and the image segmentation model quantization method embodiments belong to a same concept. For details about a specific implementation process, refer to the method embodiments. Details are not described herein again.

An embodiment of this application further provides a computer device. The computer device includes a processor and a memory. The memory stores at least one computer program. The at least one computer program is loaded and executed by the processor to implement the operations performed in the image segmentation model quantization method in the foregoing embodiments.

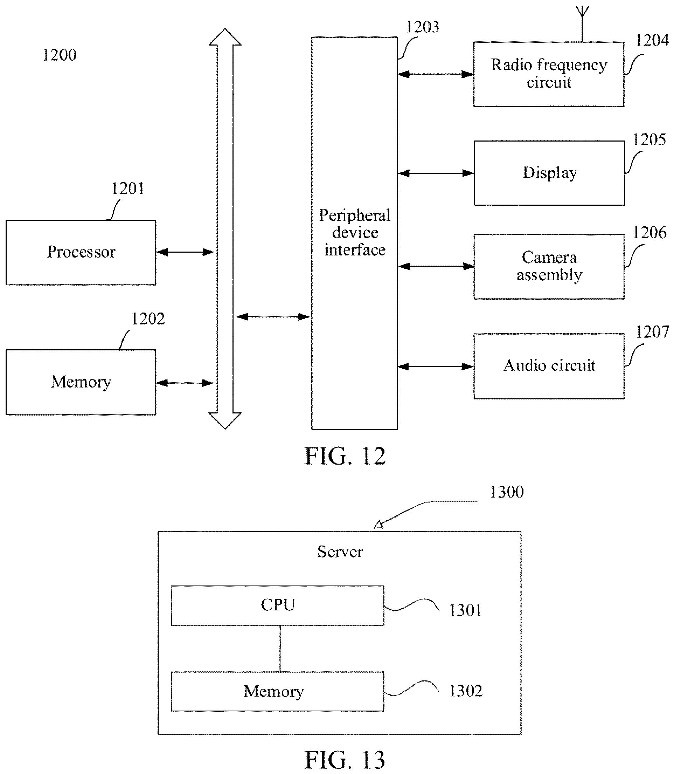

In the embodiments of the present disclosure, the computer device can be provided as a terminal. FIG. 12 is a schematic structural diagram of a terminal 1200 according to an exemplary embodiment of this application.

In the embodiments of the present disclosure, the terminal 1200 can include a processor 1201 and a memory 1202.

The processor 1201 may include one or more processing cores, for example, is a 4-core processor or an 8-core processor. The processor 1201 may be implemented in at least one hardware form of a digital signal processor (DSP), a field-programmable gate array (FPGA), and a programmable logic array (PLA). In some embodiments, the processor 1201 may be integrated with a graphics processing unit (GPU). The GPU is configured to render and draw content that needs to be displayed on a display screen. In some embodiments, the processor 1201 may further include an artificial intelligence (AI) processor. The AI processor is configured to process computing operations related to machine learning.

The memory 1202 may include one or more computer-readable storage media. The computer-readable storage medium may be non-transitory. In some embodiments, the non-transitory computer-readable storage medium in the memory 1202 is configured to store at least one computer program, and the at least one computer program is executed by the processor 1201 to implement the image segmentation model quantization method provided in the method embodiments of this application.

In the embodiments of the present disclosure, the terminal 1200 can further include a peripheral device interface 1203 and at least one peripheral device. The processor 1201, the memory 1202, and the peripheral device interface 1203 may be connected through a bus or a signal cable. Each peripheral device may be connected to the peripheral device interface 1203 through a bus, a signal cable, or a circuit board. Optionally, the peripheral device includes at least one of a radio frequency circuit 1204, a display screen 1205, a camera assembly 1206, and an audio circuit 1207.

The peripheral device interface 1203 may be configured to connect at least one input/output (I/O)-related peripheral device to the processor 1201 and the memory 1202. In some embodiments, the processor 1201, the memory 1202, and the peripheral device interface 1203 are integrated on one chip or circuit board. In some other embodiments, any one or two of the processor 1201, the memory 1202, and the peripheral device interface 1203 may be implemented on a separate chip or circuit board. This is not limited in this embodiment.

The radio frequency circuit 1204 is configured to receive and transmit a radio frequency (RF) signal, also referred to as an electromagnetic signal. The radio frequency circuit 1204 communicates with a communications network and another communications device through the electromagnetic signal. The radio frequency circuit 1204 converts an electrical signal into an electromagnetic signal for transmission, or converts a received electromagnetic signal into an electrical signal.

The display screen 1205 is configured to display a user interface (UI). The UI may include a graph, text, an icon, a video, and any combination thereof. In a case that the display screen 1205 is a touch display screen, the display screen 1205 further has a capability of acquiring a touch signal on or above a surface of the display screen 1205. The touch signal may be inputted to the processor 1201 as a control signal for processing. In this case, the display screen 1205 may be further configured to provide a virtual button and/or a virtual keyboard, also referred to as a soft button and/or a soft keyboard.

The camera assembly 1206 is configured to capture images or videos. Optionally, the camera assembly 1206 includes a front-facing camera and a rear-facing camera. The front-facing camera is disposed on a front panel of the terminal 1200, and the rear-facing camera is disposed on a rear side of the terminal 1200.

The audio circuit 1207 may include a microphone and a speaker. The microphone is configured to acquire sound waves of a user and an environment, convert the sound waves into an electrical signal, and input the electrical signal to the processor 1201 for processing, or input the electrical signal to the radio frequency circuit 1204 for implementing voice communication.

A person skilled in the art may understand that the structure shown in FIG. 12 constitutes no limitation on the terminal 1200, and the terminal may include more or fewer components than those shown in the figure, or some components may be combined, or a different component layout may be used.

In the embodiments of the present disclosure, the computer device can be provided as a server. FIG. 13 is a schematic structural diagram of a server according to an embodiment of this application. The server 1300 may vary greatly due to different configurations or performance, and may include one or more central processing units (CPUs) 1301 and one or more memories 1302. The memory 1302 stores at least one computer program, and the at least one computer program is loaded and executed by the CPU 1301 to implement the methods provided in the foregoing method embodiments. Certainly, the server may further include components such as a wired or wireless network interface, a keyboard, and an input/output interface, to facilitate input and output. The server may further include another component configured to implement a function of a device. Details are not described herein.

In the embodiments of the present disclosure, a computer-readable storage medium can be further provided. The computer-readable storage medium stores at least one computer program, and the at least one computer program is loaded and executed by a processor to implement the operations performed in the methods in the foregoing embodiments.

In the embodiments of the present disclosure, a computer program product or a computer program can be further provided. The computer program product or the computer program includes computer program code. The computer program code is stored in a computer-readable storage medium. A processor of a computer device reads the computer program code from the computer-readable storage medium, and the processor executes the computer program code, so that the computer device implements the operations performed in the methods in the foregoing embodiments.

In the embodiments of the present disclosure, a computer program included in the embodiments of this application may be deployed on one computer device for execution, or may be executed on a plurality of computer devices in one location, or may be executed on a plurality of computer devices that are distributed in a plurality of locations and that are interconnected through a communications network. The plurality of computer devices that are distributed in a plurality of locations and that are interconnected through a communications network may form a blockchain system.

A person of ordinary skill in the art may understand that all or some of the steps of the foregoing embodiments may be implemented by hardware, or may be implemented by a program instructing relevant hardware. The program may be stored in a computer-readable storage medium. The storage medium may be a read-only memory, a magnetic disk, an optical disc, or the like.

The foregoing descriptions are merely optional embodiments of the embodiments of this application, but are not intended to limit the embodiments of this application. Any modification, equivalent replacement, or improvement made within the spirit and principle of the embodiments of this application shall fall within the protection scope of this application.

## Claims

1. A method for quantizing an image segmentation model, the method comprising:

acquiring, by a computer device, a first image segmentation model, the first image segmentation model comprising a plurality of first operators, a concatenation layer, and a second operator, an output of each of the first operators being an input of the concatenation layer, and an output of the concatenation layer being an input of the second operator;

determining, by the computer device, an input range of each operator of the first operators and the second operator, and determining a quantization parameter of the each operator based on the input range of the each operator and a target output range, output data obtained based on the determined quantization parameter of the each operator belonging to the target output range;

quantizing, by the computer device, a network parameter of the concatenation layer based on the determined quantization parameter, to obtain a quantized image segmentation model for performing an image segmentation task.

2. The method according to claim 1, wherein after obtaining the quantized image segmentation model, the method comprises:

capturing, by using a camera, an original image comprising a character, and calling the quantized image segmentation model to segment the original image, to obtain a target image comprising a character area; or

capturing, by using a camera, an original image comprising a face, and calling the quantized image segmentation model to segment the original image, to obtain a target image comprising a face area; or

capturing, by using a camera, an environment image comprising an environment element, and calling the quantized image segmentation model to segment the original image, to obtain a target image comprising the environment element.

3. The method according to claim 1, wherein the determining a quantization parameter of the each operator based on the input range of the each operator and a target output range comprises:

determining, by the computer device, a quantization parameter of each of the first operators based on an input range of each of the first operators, an input range of the second operator, and the target output range, output data obtained based on the determined quantization parameter of each of the first operators belonging to the target output range; and

determining, by the computer device, a quantization parameter of the second operator based on the input range of the second operator and the target output range, output data obtained based on the determined quantization parameter of the second operator belonging to the target output range.

4. The method according to claim 1, wherein the determining, by the computer device, an input range of each operator of the first operators and the second operator, and determining a quantization parameter of the each operator based on the input range of the each operator and a target output range comprises:

for each of a plurality of rounds, determining, by the computer device, an input range of the each operator in the round; and

determining, by the computer device, a quantization parameter of the each operator based on the input range of the each operator in the round, an input range of the each operator in a previous round of the round, and the target output range.

5. The method according to claim 4, wherein the determining, by the computer device, an input range of the each operator in the round comprises:
calling, by the computer device, the first image segmentation model to process a plurality of pieces of test data corresponding to the round, to determine the input range of the each operator in the round, a plurality of pieces of test data corresponding to each round varying.

6. The method according to claim 4, wherein the determining, by the computer device, a quantization parameter of the each operator based on the input range of the each operator in the round, an input range of the each operator in a previous round of the round, and the target output range comprises:

determining, by the computer device, a quantization parameter of each of the first operators based on an input range of each of the first operators in the round, an input range of each of the first operators in the previous round, an input range of the second operator in the round, an input range of the second operator in the previous round, and the target output range; and

determining, by the computer device, a quantization parameter of the second operator based on the input range of the second operator in the round, the input range of the second operator in the previous round, and the target output range, until output data obtained based on the determined quantization parameter of the each operator of the first operators and the second operator belongs to the target output range.

7. The method according to claim 6, wherein the determining, by the computer device, a quantization parameter of each of the first operators based on an input range of each of the first operators in the round, an input range of each of the first operators in the previous round, an input range of the second operator in the round, an input range of the second operator in the previous round, and the target output range comprises:

weighting, by the computer device, the input range of each of the first operators in the round and the input range of each of the first operators in the previous round, to obtain a first input range of each of the first operators;
weighting, by the computer device, the input range of the second operator in the round and the input range of the second operator in the previous round, to obtain a second input range of the second operator; and
determining, by the computer device, the quantization parameter of each of the first operators based on the first input range of each of the first operators, the second input range, and the target output range.

8. The method according to claim 7, wherein the determining, by the computer device, the quantization parameter of each of the first operators based on the first input range of each of the first operators, the second input range, and the target output range comprises:

determining, by the computer device, a first weight parameter corresponding to each of the first operators, and a second weight parameter corresponding to the second operator, the first weight parameter being negatively correlated with the number of times of determining the quantization parameter, and the second weight parameter being positively correlated with the number;
weighting, by the computer device, the first input range of each of the first operators and the second input range based on the first weight parameter and the second weight parameter, to obtain a target input range of each of the first operators; and
determining, by the computer device, the quantization parameter of each of the first operators based on the target input range of each of the first operators and the target output range, so that the determined quantization parameter is capable of quantizing data within the target input range into the target output range.

9. The method according to claim 8, wherein the weighting, by the computer device, the first input range of each of the first operators and the second input range based on the first weight parameter and the second weight parameter, to obtain a target input range of each of the first operators comprises:

for each of the first operators, weighting, by the computer device based on a first weight parameter of the first operator and the second weight parameter, a minimum value within a first input range of the first operator and a minimum value within the second input range, to obtain a target minimum value;
weighting, by the computer device based on the first weight parameter and the second weight parameter, a maximum value within the first input range and a maximum value within the second input range, to obtain a target maximum value; and
determining, by the computer device, that a range between the target minimum value and the target maximum value is a target input range of the first operator.

10. The method according to claim 8, wherein each of the first operators comprises a first quantization parameter, and the determining, by the computer device, the quantization parameter of each of the first operators based on the target input range of each of the first operators and the target output range, so that the determined quantization parameter is capable of quantizing data within the target input range into the target output range comprises:

for each of the first operators, determining, by the computer device, a first difference between a maximum value and a minimum value within a target input range of the first operator;
determining, by the computer device, a second difference between a maximum value and a minimum value within the target output range; and
determining, by the computer device, that a ratio of the first difference to the second difference is the first quantization parameter of the first operator, the first quantization parameter indicating a scaling ratio of data.

11. The method according to claim 10, wherein each of the first operators further comprises a second quantization parameter, and the determining, by the computer device, the quantization parameter of each of the first operators based on the target input range of each of the first operators and the target output range, so that the determined quantization parameter is capable of quantizing data within the target input range into the target output range comprises:

rounding, by the computer device, a ratio of the minimum value within the target input range to the determined first quantization parameter, to obtain a reference minimum value; and

determining, by the computer device, that a difference between the minimum value within the target output range and the reference minimum value is the second quantization parameter of the first operator, the second quantization parameter indicating a shift magnitude of data.

12. The method according to claim 1, wherein the determining, by the computer device, an input range of each operator of the first operators and the second operator, and determining a quantization parameter of the each operator based on the input range of the each operator and a target output range comprises:

disabling, by the computer device, each of the first operators and the second operator in the first image segmentation model, determining that each of a plurality of input ranges of the concatenation layer is respectively a third input range of corresponding one of the first operators, and determining that an output range of the concatenation layer is a third input range of the second operator;

determining, by the computer device, a quantization parameter of each of the first operators and a quantization parameter of the second operator based on the third input range of each of the first operators, the third input range of the second operator, and the target output range;

enabling, by the computer device, each of the first operators and the second operator in the first image segmentation model, and determining a fourth input range of each of the first operators and a fourth input range of the second operator; and

redetermining, by the computer device, a quantization parameter of each of the first operators and a quantization parameter of the second operator based on the fourth input range of each of the first operators, the fourth input range of the second operator, and the target output range, output data obtained based on the redetermined quantization parameter of each of the first operators and the second operator belonging to the target output range.

13. The method according to claim 1, wherein each of the first operators comprises a first quantization operator and a first dequantization operator, and the second operator comprises a second quantization operator and a second dequantization operator; and after the determining a quantization parameter of the each operator based on the input range of the each operator and a target output range, the method further comprises:

deleting, by the computer device, the first dequantization operator from each of the first operators, and deleting the second quantization operator from the second operator.

14. An image segmentation model quantization apparatus, the apparatus comprising:

a model acquisition module, configured to acquire a first image segmentation model, the first image segmentation model comprising a plurality of first operators, a concatenation layer, and a second operator, an output of each of the first operators being an input of the concatenation layer, and an output of the concatenation layer being an input of the second operator;

a parameter update module, configured to determine an input range of each operator of the first operators and the second operator, and determine a quantization parameter of the each operator based on the input range of the each operator and a target output range, output data obtained based on the determined quantization parameter of the each operator belonging to the target output range;

a quantization module, configured to quantize a network parameter of the concatenation layer based on the determined quantization parameter to obtain a quantized image segmentation model; and

a segmentation module, configured to call the quantized image segmentation model to perform an image segmentation task.

15. A computer device, the computer device comprising a processor and a memory, the memory storing at least one computer program, and the at least one computer program being loaded and executed by the processor to implement the operations performed in the image segmentation model quantization method according to any one of claims 1 to 13.

16. A computer-readable storage medium, the computer-readable storage medium storing at least one computer program, and the at least one computer program being loaded and executed by a processor to implement the operations performed in the image segmentation model quantization method according to any one of claims 1 to 13.

17. A computer program product, the computer program product comprising computer program code, the computer program code being stored in a computer-readable storage medium, a processor of a computer device reading the computer program code from the computer-readable storage medium, and the processor executing the computer program code, so that the computer device implements the operations performed in the image segmentation model quantization method according to any one of claims 1 to 13.

102

101

Wired network or
wireless network

## FIG. 1

A computer device acquires a first model

201

The computer device determines an input range of each operator of the first operators and the second operator, and determines a quantization parameter of the each operator based on the input range of the each operator and a target output range, output data obtained based on the determined quantization parameter of the each operator belonging to the target output range

202

The computer device quantizes a network parameter of the concatenation layer based on the determined quantization parameter

203

## FIG. 2

A computer device acquires a first model  301

For each of a plurality of rounds, the computer device determines an input range of each operator of the first operators and the second operator  302

The computer device determines a quantization parameter of each of the first operators based on an input range of each of the first operators in the round, an input range of each of the first operators in a previous round, an input range of the second operator in the round, an input range of the second operator in the previous round, and a target output range  303

The computer device determines a quantization parameter of the second operator based on the input range of the second operator in the round, the input range of the second operator in the previous round, and the target output range, until the quantization parameter of each of the first operators and the quantization parameter of the second operator converge to the quantization parameter corresponding to the target output range  304

The computer device quantizes a network parameter of the concatenation layer based on the quantization parameter  305

FIG. 3

FIG. 4

FIG. 5

A computer device acquires a first model — 601

The computer device determines an input range of each of a plurality of first pseudo-quantization operators and a second pseudo-quantization operator — 602

The computer device determines a quantization parameter of each first pseudo-quantization operator based on an input range of each first pseudo-quantization operator, an input range of the second pseudo-quantization operator, and a target output range — 603

The computer device determines a quantization parameter of the second pseudo-quantization operator based on the input range of the second pseudo-quantization operator and the target output range, so that the quantization parameter of each first pseudo-quantization operator and the quantization parameter of the second pseudo-quantization operator converge to a quantization parameter corresponding to the target output range — 604

The computer device deletes a first dequantization operator from each first pseudo-quantization operator, and deletes a second quantization operator from the second pseudo-quantization operator — 605

The computer device quantizes a network parameter of a concatenation layer based on the quantization parameter corresponding to the target output range — 606

FIG. 6

A computer device acquires a first model — 701

The computer device disables each of the first operators and a second operator in the first model, determines that each of a plurality of input ranges of a concatenation layer is respectively a third input range of corresponding one of the first operators, and determines that an output range of the concatenation layer is a third input range of the second operator — 702

The computer device determines a quantization parameter of each of the first operators and a quantization parameter of the second operator based on a third input range of each of the first operators, the third input range of the second operator, and a target output range — 703

The computer device enables each of the first operators and the second operator in the first model, and determines a fourth input range of each of the first operators and a fourth input range of the second operator — 704

The computer device continues to determine the quantization parameter of each of the first operators and the quantization parameter of the second operator based on the fourth input range of each of the first operators, the fourth input range of the second operator, and the target output range, so that the quantization parameter of each of the first operators and the quantization parameter of the second operator converge to a quantization parameter corresponding to the target output range — 705

The computer device quantizes a network parameter of a concatenation layer based on the quantization parameter — 706

FIG. 7

A computer device acquires a first image segmentation model, the first image segmentation model including a plurality of first operators, a concatenation layer, and a second operator ⟩ 801

The computer device determines an input range of each operator of the plurality of first operators and the second operator, and determines a quantization parameter of the each operator based on the input range of the each operator and a target output range, so that the quantization parameter of each operator converges to a quantization parameter corresponding to the target output range ⟩ 802

The computer device quantizes a network parameter of the concatenation layer based on the quantization parameter, to obtain a quantized image segmentation model ⟩ 803

The computer device calls the quantized image segmentation model to perform an image segmentation task ⟩ 804

FIG. 8

A computer device acquires a trained first image segmentation model                                     901

The computer device inserts a first pseudo-quantization operator before a concatenation layer of the first image segmentation model, and inserts a second pseudo-quantization operator after the concatenation layer                                     902

For each of a plurality of rounds, the computer device determines an input range of each of a plurality of first pseudo-quantization operators and the second pseudo-quantization operator                                     903

The computer device determines a quantization parameter of each first pseudo-quantization operator based on an input range of each first pseudo-quantization operator in the round, an input range of each first pseudo-quantization operator in a previous round, an input range of the second pseudo-quantization operator in the round, an input range of the second pseudo-quantization operator in the previous round, and a target output range                                     904

The computer device determines a quantization parameter of the second pseudo-quantization operator based on the input range of the second pseudo-quantization operator in the round, the input range of the second pseudo-quantization operator in the previous round, and the target output range, until the quantization parameter of each first pseudo-quantization operator and the quantization parameter of the second pseudo-quantization operator converge to a quantization parameter corresponding to the target output range                                     905

The computer device deletes a dequantization operator from each first pseudo-quantization operator, deletes a quantization operator from the second pseudo-quantization operator, and retains a quantization operator in each first pseudo-quantization operator and a dequantization operator in the second pseudo-quantization operator                                     906

The computer device quantizes a network parameter of the concatenation layer based on the quantization parameter, and quantizes the network parameter into the target output range, to obtain a quantized image segmentation model                                     907

The computer device calls the quantized image segmentation model to perform an image segmentation task                                     909

FIG. 9

Model acquisition module — 1001

Parameter update module — 1002

Quantization module — 1003

Segmentation module — 1004

## FIG. 10

Model acquisition module

Model acquisition unit — 1011

Operator insertion unit — 1021

— 1001

Parameter update module — 1002

First parameter update unit — 1012

Second parameter update unit — 1022

Range determining unit — 1032

Third parameter update unit — 1042

Operator adjustment module — 1004

Quantization module — 1003

Segmentation module — 1004

## FIG. 11

1200

1201

Processor

1202

Memory

1203

Peripheral
device
interface

1204

Radio frequency
circuit

1205

Display

1206

Camera
assembly

1207

Audio circuit

FIG. 12

1300

Server

CPU

1301

Memory

1302

FIG. 13

## INTERNATIONAL SEARCH REPORT

| | International application No. |
| --- | --- |
| | **PCT/CN2022/100106** |

**A. CLASSIFICATION OF SUBJECT MATTER**

G06N 3/08(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNTXT; CNABS; ENTXT; VEN; USTXT; EPTXT; WOTXT; CNKI; IEEE: 图像, 拼接层, 融合, 神经网络, 卷积神经网络, 模型, 量化, 算子, 卷积层, 范围, image, concat, fusion, neural network, cnn, model, quantize, operator, convolution, range

**C. DOCUMENTS CONSIDERED TO BE RELEVANT**

| Category* | Citation of document, with indication, where appropriate, of the relevant passages | Relevant to claim No. |
| --- | --- | --- |
| X | CN 107688855 A (BEIJING DEEPHI TECHNOLOGY CO., LTD.) 13 February 2018 (2018-02-13) description, paragraphs 2-3 and 41-138 | 1-3, 12-17 |
| Y | CN 112561933 A (SHENLAN ARTIFICIAL INTELLIGENCE (SHENZHEN) CO., LTD.) 26 March 2021 (2021-03-26) description, paragraphs 54-151 | 1-3, 12-17 |
| Y | CN 112580492 A (SHENLAN ARTIFICIAL INTELLIGENCE (SHENZHEN) CO., LTD.) 30 March 2021 (2021-03-30) description, paragraphs 46-134 | 1-3, 12-17 |
| Y | CN 110059733 A (SUZHOU KEDA TECHNOLOGY CO., LTD.) 26 July 2019 (2019-07-26) description, paragraphs 27-116 | 1-3, 12-17 |
| Y | CN 111401550 A (BEIJING MEGVII TECHNOLOGY CO., LTD.) 10 July 2020 (2020-07-10) description, paragraphs 32-126 | 1-3, 12-17 |
| A | CN 109388779 A (ALLWINNER TECHNOLOGY CO., LTD.) 26 February 2019 (2019-02-26) description, paragraphs 28-77 | 1-17 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 August 2022** | **26 August 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/100106**

C.    DOCUMENTS CONSIDERED TO BE RELEVANT

| Category* | Citation of document, with indication, where appropriate, of the relevant passages | Relevant to claim No. |
|---|---|---|
| A | US 2017061620 A1 (SAMSUNG ELECTRONICS CO., LTD. et al.) 02 March 2017 (2017-03-02)<br>entire document | 1-17 |

Form PCT/ISA/210 (second sheet) (January 2015)

**INTERNATIONAL SEARCH REPORT**
Information on patent family members

| International application No. |
| --- |
| **PCT/CN2022/100106** |

| Patent document cited in search report | | | Publication date (day/month/year) | Patent family member(s) | | | Publication date (day/month/year) |
| --- | --- | --- | --- | --- | --- | --- | --- |
| CN | 107688855 | A | 13 February 2018 | CN | 107657316 | A | 02 February 2018 |
| | | | | CN | 107688855 | B | 13 April 2021 |
| | | | | CN | 107657316 | B | 07 April 2020 |
| | | | | US | 2018046913 | A1 | 15 February 2018 |
| | | | | US | 10802992 | B2 | 13 October 2020 |
| CN | 112561933 | A | 26 March 2021 | None | | | |
| CN | 112580492 | A | 30 March 2021 | None | | | |
| CN | 110059733 | A | 26 July 2019 | None | | | |
| CN | 111401550 | A | 10 July 2020 | WO | 2021179587 | A1 | 16 September 2021 |
| CN | 109388779 | A | 26 February 2019 | None | | | |
| US | 2017061620 | A1 | 02 March 2017 | KR | 101659578 | B1 | 23 September 2016 |
| | | | | US | 10198799 | B2 | 05 February 2019 |

Form PCT/ISA/210 (patent family annex) (January 2015)

**EP 4 375 881 A1**

## REFERENCES CITED IN THE DESCRIPTION

### Patent documents cited in the description

- CN 202110817137